# EUROPEAN PATENT APPLICATION

(11) **EP 3 232 401 A1**
(43) Date of publication of application: **18.10.2017**
(21) Application number: 17165772.9
(22) Date of filing: 10.04.2017
(51) Int. Cl.: G06T 1/20

(54) **IMAGE PROCESSING APPARATUS, IMAGE PROCESSING METHOD, AND PROGRAM**

(30) Priority: 11.04.2016 JP 2016079085
(71) Applicant: Canon Kabushiki Kaisha, Tokyo 146-8501 (JP)
(72) Inventor: ITO, Hidenori, Ohta-ku, Tokyo 146-8501 (JP)
(74) Representative: Houle, Timothy James

(57) **Abstract**

An image processing apparatus for dividing a single image into a plurality of images and processing the plurality of images together with the a peripheral regions of the divided images.

## Description

### BACKGROUND OF THE INVENTION

### Field of the Invention

The present invention relates to an image processing apparatus, an image processing method, and a program, and in particular, relates to an image processing apparatus, an image processing method, and a storage medium that are suitable for use in dividing a single image into a plurality of images and processing the plurality of images.

### Description of the Related Art

In recent years, the resolution of a video display device typified by a liquid crystal display or a liquid crystal projector is increasingly enhanced to high resolution such as 4K2K or 8K4K. To perform image processing on an image to be output to such a high-resolution video display device, it becomes difficult to perform the processing using a single image processing apparatus (e.g., system large-scale integration (LSI)). The reasons for this include the operating frequency of the system LSI and the performance of the data rate of a main memory including a dynamic random-access memory (DRAM). To solve this problem, there is a case where a system for processing a single output video image is configured using a plurality of image processing apparatuses. Further, there is also a form in which a video source to be input to a single video display device is transmitted by dividing an image signal forming a single display screen into a plurality of signals. For example, there is a standard prescribed by Society of Motion Picture and Television Engineers (SMPTE) 425-5 for achieving 4K video transmission using four 3G-serial digital interfaces (SDIs). In the transmission form of such an image signal, the achievement of a single system using a plurality of image processing apparatuses is promoted, partly because this is convenient to configure a system in such a manner that a plurality of image signals is input to separate image processing apparatuses.

Meanwhile, image processing performed by an image processing apparatus includes a process performed by referencing a neighboring pixel of a processing target pixel (a filter process). Also in a case where a filter process is performed, a form is possible in which a single image signal is divided into a plurality of signals, and the plurality of divided image signals are input to separate image processing apparatuses. If such a form is employed, an image processing apparatus, when performing a filter process on a processing target pixel near the boundary of an image signal input to the image processing apparatus, needs to acquire information of a neighboring pixel of the processing target pixel from another image processing apparatus. Thus, a plurality of image processing apparatuses needs to share a pixel region in a predetermined range from the boundary between divided image signals. In the following description, this pixel region will be referred to as an "overlap region", where necessary. The number of pixels (i.e., the above predetermined range) required as the overlap region is determined by the content of a filter process to be performed by an image processing apparatus. In the case of an image processing apparatus for performing high-quality image processing, the number of pixels as an overlap region may amount to several tens of pixels.

Japanese Patent Application Laid-Open No. 2013-25618 discusses a method in which a plurality of image processing apparatuses shares image data as an overlap region. Japanese Patent Application Laid-Open No. 2013-25618 discusses a technique for changing a scanning direction for reading image data from a frame memory, so that image processing requiring the overlap region is performed by the image processing apparatuses at the same timing. Further, in Japanese Patent Application Laid-Open No. 2013-25618, each image processing apparatus exchanges, in image data input to the image processing apparatus, image data of an overlap region that needs to be referenced by another image processing apparatus via an inter-chip interface, thereby sharing the overlap region with another image processing apparatus.

In the technique of Japanese Patent Application Laid-Open No. 2013-25618, however, it is necessary to provide inter-chip interfaces between all image processing apparatuses to which overlap regions need to be transferred. More specifically, inter-chip interfaces are provided between a certain image processing apparatus and image processing apparatuses for handling image data adjacent in horizontal, vertical, and oblique directions to image data to be processed by the certain image processing apparatus. Thus, the number of transfer paths increases, and also transfer control becomes complicated. This increases the cost. For example, suppose that an inter-chip interface is achieved using a Peripheral Component Interconnect Express (PCIe) bus. In this case, the cost increases due to an increase in the number of pins of system LSI and the external provision of a PCIe switch having a large number of routing branches.

### SUMMARY OF THE INVENTION

According to a first aspect of the present invention, there is provided an image processing apparatus as specified in claims 1 to 8. According to a second aspect of the present invention, there is provided an image processing method as specified in claim 9. According to a third aspect of the present invention, there is provided a program as specified in claim 10.

Further features of the present invention will become apparent from the following description of exemplary embodiments with reference to the attached drawings.

### BRIEF DESCRIPTION OF THE DRAWINGS

Figs. 1A and 1B are diagrams illustrating a first example of a configuration of an image processing system.
Figs. 2A, 2B, 2C, and 2D are diagrams illustrating overlap regions.
Figs. 3A, 3B, 3C, and 3D are diagrams illustrating image data necessary to perform a filter process.
Figs. 4A, 4B, and 4C are diagrams illustrating a first example of a method for transmitting and receiving image data.
Fig. 5 is a diagram illustrating a first example of a configuration of an image processing apparatus.
Figs. 6A and 6B are diagrams illustrating a storage format of a frame buffer.
Fig. 7 is a flowchart illustrating a first example of processing of the image processing apparatus.
Fig. 8A is a diagram illustrating divided image data input to image processing apparatuses.
Fig. 8B is a diagram illustrating image data held in the image processing apparatuses in step S701.
Fig. 8C is a diagram illustrating writing of image data in step S702.
Fig. 8D is a diagram illustrating writing of image data in step S703.
Fig. 8E is a diagram illustrating image data held in the image processing apparatuses in step S704.
Fig. 8F is a diagram illustrating reading of image data in step S705.
Fig. 8G is a diagram illustrating reading of image data in step S706.
Fig. 8H is a diagram illustrating image data received by image processing modules.
Fig. 8I is a diagram illustrating divided output images output from the image processing modules.
Fig. 9 is a diagram illustrating a second example of the configuration of the image processing apparatus.
Fig. 10 is a flowchart illustrating a second example of the processing of the image processing apparatus.
Fig. 11A is a diagram illustrating divided image data input to image processing apparatuses.
Fig. 11B is a diagram illustrating writing of image data in step S1002.
Fig. 11C is a diagram illustrating image data held in the image processing apparatuses in step S1003.
Fig. 11D is a diagram illustrating reading of image data in step S1003.
Fig. 11E is a diagram illustrating writing of image data in step S1003.
Fig. 11F is a diagram illustrating image data held in the image processing apparatuses in step S1004.
Fig. 11G is a diagram illustrating reading of image data in step S1004.
Fig. 11H is a diagram illustrating writing of image data in step S1004.
Fig. 11I is a diagram illustrating image data held in the image processing apparatuses in step S1005.
Fig. 11J is a diagram illustrating reading of image data in step S1005.
Figs. 12A, 12B, and 12C are diagrams illustrating a second example of the method for transmitting and receiving image data.
Figs. 13A and 13B are diagrams illustrating a second example of the configuration of the image processing system.
Fig. 14A is a diagram illustrating a first stage in the second example of the method for transmitting and receiving image data.
Fig. 14B is a diagram illustrating a second stage in the second example of the method for transmitting and receiving image data.
Fig. 14C is a diagram illustrating a third stage in the second example of the method for transmitting and receiving image data.

### DESCRIPTION OF THE EMBODIMENTS

With reference to the attached drawings, exemplary embodiments will be described in detail below. The configurations illustrated in the following exemplary embodiments are merely examples, and the present invention is not limited to the configurations illustrated in the figures.

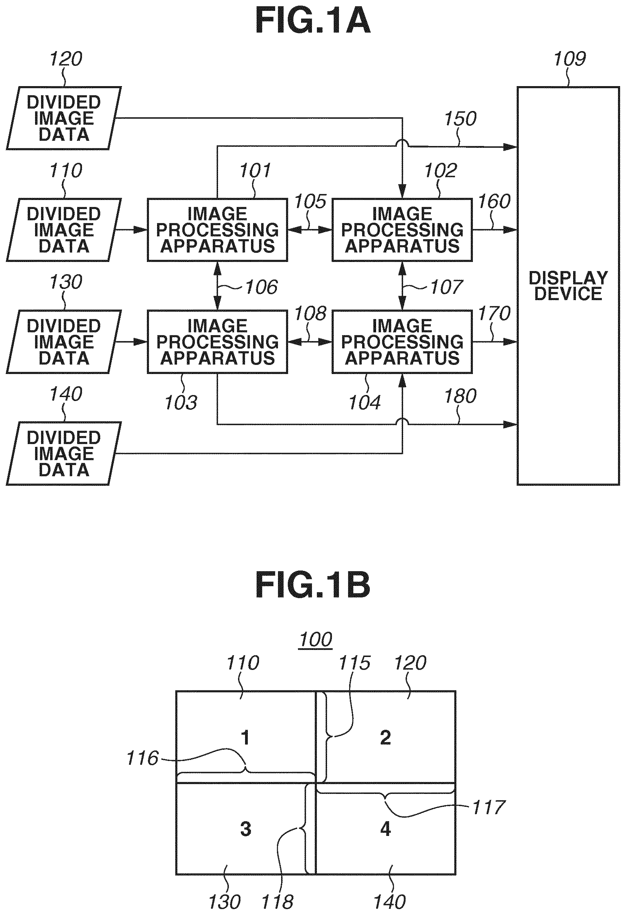

First, a first exemplary embodiment is described. The present exemplary embodiment is described taking as an example a case where a single image is divided into a total of four regions, namely two regions in each of horizontal and vertical directions. Figs. 1A and 1B are diagrams illustrating an example of the configuration of an image processing system (Fig. 1A) and examples of four pieces of divided image data (Fig. 1B). Divided image data is image data obtained by dividing a single piece of image data. For example, the image processing system can be configured using four image processing apparatuses for dividing a single 4K2K (3840 × 2160) image into four 2K1K (1920 × 1080) rectangular images and individually processing four pieces of divided image data of the divided images. The image processing apparatuses can be achieved using, for example, system large-scale integration (LSI).

However, the angle of view with which the image processing apparatuses are compatible is not limited to the above combination of 4K2K and 2K1K. For example, the image processing system can also be configured using image processing apparatuses for dividing 8K4K image data into four pieces of 4K2K divided image data and processing the four pieces of 4K2K divided image data. Further, the number of divisions of an image is not limited to four, and may be m × n. In this case, m and n represent the numbers of divisions in the vertical and horizontal directions, respectively, of a division target image. More specifically, the division target image is divided into m images in the vertical direction of the image and n images in the horizontal direction of the image. Each of m and n is an integer equal to or greater than 1 (if at least either one of m and n is an integer equal to or greater than 2, the division target image is divided into a plurality of images). Thus, a single image processing system can be configured by combining m × n image processing apparatuses. As described above, in the present exemplary embodiment, the image processing system includes a plurality of similar image processing apparatuses. The present exemplary embodiment is described taking as an example a case where m = 2 and n = 2.

In Fig. 1A, the image processing system includes image processing apparatuses 101 to 104, inter-apparatus transmission paths 105 to 108, and a display device 109. The image processing apparatuses 101 and 102 are connected to each other via the inter-apparatus transmission path 105. Similarly, the image processing apparatuses 101 and 103 are connected to each other via the inter-apparatus transmission path 106. The image processing apparatuses 102 and 104 are connected to each other via the inter-apparatus transmission path 107. The image processing apparatuses 103 and 104 are connected to each other via the inter-apparatus transmission path 108. The inter-apparatus transmission paths 105 to 108 are paths for exchanging image data of an overlap region between image processing apparatuses. In a case where the image processing apparatuses 101 to 104 are configured using system LSI, the inter-apparatus transmission paths 105 to 108 are achieved by, for example, connections using Peripheral Component Interconnect Express (PCIe).

Divided image data 110 is input to the image processing apparatus 101. Then, the image processing apparatus 101 transmits and receives, via the inter-apparatus transmission paths 105 and 106, image data of overlap regions required for processing to be performed by the image processing apparatus 101 and the other image processing apparatuses 102 to 104. The image processing apparatus 101 performs image processing on the divided image data 110 using image data of overlap regions, thereby generating a divided output image 150. The image processing apparatus 101 outputs the divided output image 150 to the display device 109. Similarly, divided image data 120, 130, and 140 is input to the image processing apparatuses 102, 103, and 104, respectively, and the image processing apparatuses 102, 103, and 104 output divided output images 160, 170, and 180, respectively, to the display device 109. The display device 109 places the divided output images 150, 160, 170, and 180 at the same positions as those in an image before the division, thereby displaying the divided output images 150, 160, 170, and 180 as a single image. The display device 109 is achieved using, for example, a panel of a liquid crystal projector. The display device 109, however, is not limited thereto.

With reference to Figs. 1A and 1B, a description is given of examples of the placement of the divided image data 110 to 140, which is obtained by dividing image data 100, and the connections between the image processing apparatuses 101 to 104. As described above, in the present exemplary embodiment, a screen is configured by dividing a single piece of image data 100 into four regions, namely two regions in the vertical direction and two regions in the horizontal direction. In the examples illustrated in Figs. 1A and 1B, the image processing apparatus 101 processes an upper-left image (the divided image data 110) in the image data 100. Further, the image processing apparatus 102 processes an upper-right image (the divided image data 120). The image processing apparatus 103 processes a lower-left image (the divided image data 130). The image processing apparatus 104 processes a lower-right image (the divided image data 140).

The divided image data 110 and the divided image data 120 are adjacent to each other at a boundary 115 in the horizontal direction. Further, the divided image data 110 and the divided image data 130 are adjacent to each other at a boundary 116 in the vertical direction. Similarly, the divided image data 120 and the divided image data 140 are adjacent to each other at a boundary 117 in the vertical direction. The divided image data 130 and the divided image data 140 are adjacent to each other at a boundary 118 in the horizontal direction. The inter-apparatus transmission paths 105 to 108 connect image processing apparatuses to which pieces of divided image data thus adjacent to each other at boundaries in the horizontal and vertical directions are input. Thus, as illustrated in Fig. 1A, the image processing apparatus 101 is connected via the inter-apparatus transmission path 105 to the image processing apparatus 102, to which the divided image data 120 adjacent to the divided image data 110 in the horizontal direction is input. Further, the image processing apparatus 101 is connected via the inter-apparatus transmission path 106 to the image processing apparatus 103, to which the divided image data 130 adjacent to the divided image data 110 in the vertical direction is input. Similarly, the image processing apparatus 102 is connected to the image processing apparatuses 101 and 104 via the inter-apparatus transmission paths 105 and 107, respectively. The image processing apparatus 103 is connected to the image processing apparatuses 101 and 104 via the inter-apparatus transmission paths 106 and 108, respectively. The image processing apparatus 104 is connected to the image processing apparatuses 102 and 103 via the inter-apparatus transmission paths 107 and 108, respectively. Meanwhile, there are no inter-apparatus transmission paths between image processing apparatuses to which pieces of divided image data adjacent to each other in oblique directions are input, and these image processing apparatuses do not directly transmit and receive images to and from each other. More specifically, in the example illustrated in Fig. 1A, there are no inter-apparatus transmission paths between the image processing apparatuses 101 and 104 and between the image processing apparatuses 102 and 103. As described above, the connections of the inter-apparatus transmission paths 105 to 108 illustrated in Fig. 1A are determined by the placement of the divided image data 110 to 140 in Fig. 1B.

In the present exemplary embodiment, regarding the image processing apparatus 101, the image processing apparatus 102 is an example of a second image processing apparatus, the image processing apparatus 103 is an example of a third image processing apparatus, and the image processing apparatus 104 is an example of a fourth image processing apparatus. Regarding the image processing apparatus 102, the image processing apparatus 101 is an example of a second image processing apparatus, the image processing apparatus 104 is an example of a third image processing apparatus, and the image processing apparatus 103 is an example of a fourth image processing apparatus. Regarding the image processing apparatus 103, the image processing apparatus 104 is an example of a second image processing apparatus, the image processing apparatus 101 is an example of a third image processing apparatus, and the image processing apparatus 102 is an example of a fourth image processing apparatus. Regarding the image processing apparatus 104, the image processing apparatus 103 is an example of a second image processing apparatus, the image processing apparatus 102 is an example of a third image processing apparatus, and the image processing apparatus 101 is an example of a fourth image processing apparatus.

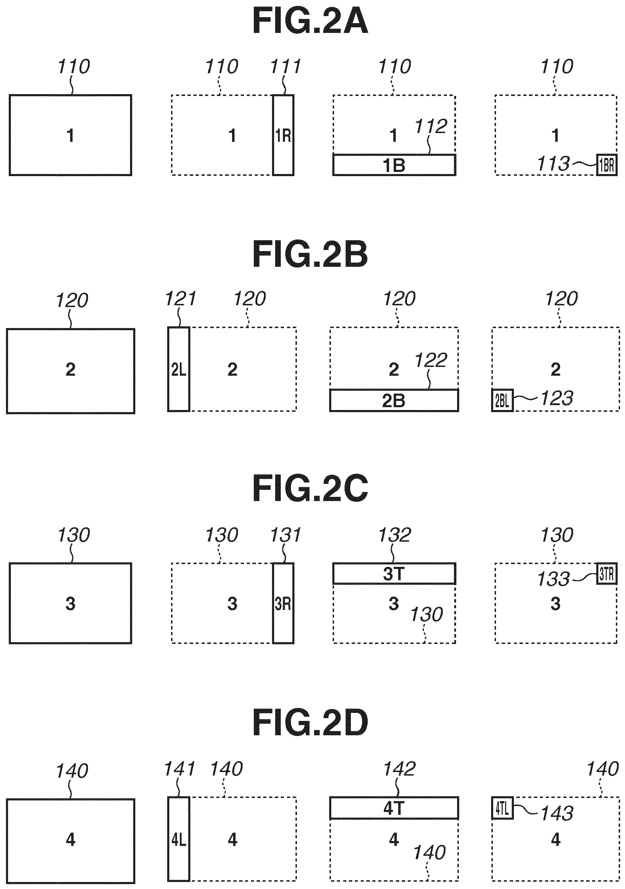

Figs. 2A, 2B, 2C, and 2D are diagrams illustrating examples of, in the divided image data 110 to 140 input to the image processing apparatuses 101 to 104, respectively, overlap regions that need to be referenced by the other image processing apparatuses. Fig. 2A illustrates overlap regions necessary for the other image processing apparatuses to perform image processing, when attention is paid to the divided image data 110. In other words, Fig. 2A illustrates examples of, in the image data input to the image processing apparatus 101, overlap regions necessary for the other image processing apparatuses 102 to 104. In Fig. 2A, image data 111 of an overlap region 1R is image data of an overlap region necessary for the image processing apparatus 102 to perform image processing on the divided image data 120, which is adjacent to the divided image data 110 at the boundary 115 at the right edge of the divided image data 110. Similarly, image data 112 of an overlap region 1B is image data of an overlap region necessary for the image processing apparatus 103 to perform image processing on the divided image data 130, which is adjacent to the divided image data 110 at the boundary 116 at the lower edge of the divided image data 110. Further, image data 113 of an overlap region 1BR is image data of an overlap region necessary for the image processing apparatus 104 to perform image processing on the divided image data 140, which is adjacent to the divided image data 110 at a boundary at the bottom right corner of the divided image data 110.

Similarly, Figs. 2B, 2C, and 2D illustrate overlap regions when attention is paid to the divided image data 120, 130, and 140, respectively. In other words, Fig. 2B illustrates examples of, in the image data input to the image processing apparatus 102, overlap regions necessary for the other image processing apparatuses 101, 103, and 104. Fig. 2C illustrates examples of, in the image data input to the image processing apparatus 103, overlap regions necessary for the other image processing apparatuses 101, 102, and 104. Fig. 2D illustrates examples of, in the image data input to the image processing apparatus 104, overlap regions necessary for the other image processing apparatuses 101 to 103. Similar to the divided image data 110, the divided image data 120 includes image data 121, 122, and 123 of overlap regions 2L, 2B, and 2BL. The divided image data 130 includes image data 131, 132, and 133 of overlap regions 3R, 3T, and 3TR. The divided image data 140 includes image data 141, 142, and 143 of overlap regions 4L, 4T, and 4TL.

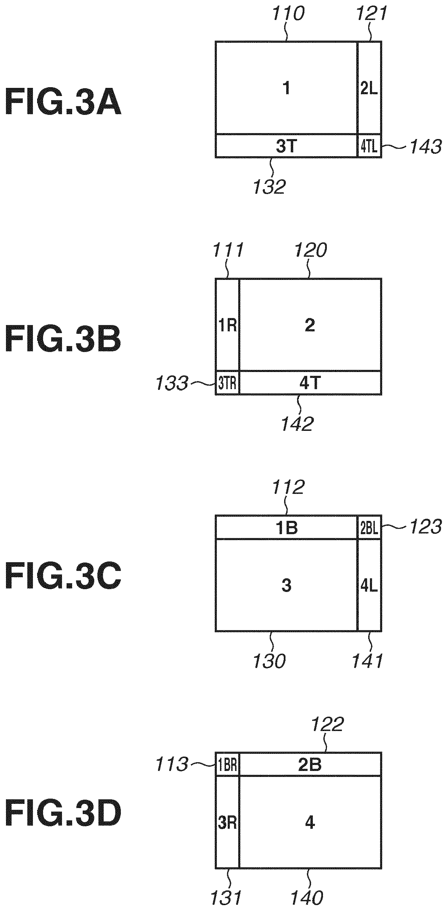

Figs. 3A, 3B, 3C, and 3D are diagrams illustrating examples of all image data necessary for the image processing apparatuses 101 to 104, respectively, to perform image processing including a filter process. Fig. 3A illustrates an example of all image data necessary for the image processing apparatus 101 to perform image processing. As illustrated in Fig. 3A, when performing image processing, the image processing apparatus 101 needs to acquire the following image data in addition to the divided image data 110, which is input to the image processing apparatus 101. First, the image processing apparatus 101 needs to acquire the image data 121 of the overlap region 2L from the image processing apparatus 102. Further, the image processing apparatus 101 needs to acquire the image data 132 of the overlap region 3T from the image processing apparatus 103. Further, the image processing apparatus 101 needs to acquire the image data 143 of the overlap region 4TL from the image processing apparatus 104. Similarly, image data necessary for the image processing apparatuses 102, 103, and 104 to perform image processing is as illustrated in Figs. 3B, 3C, and 3D, respectively.

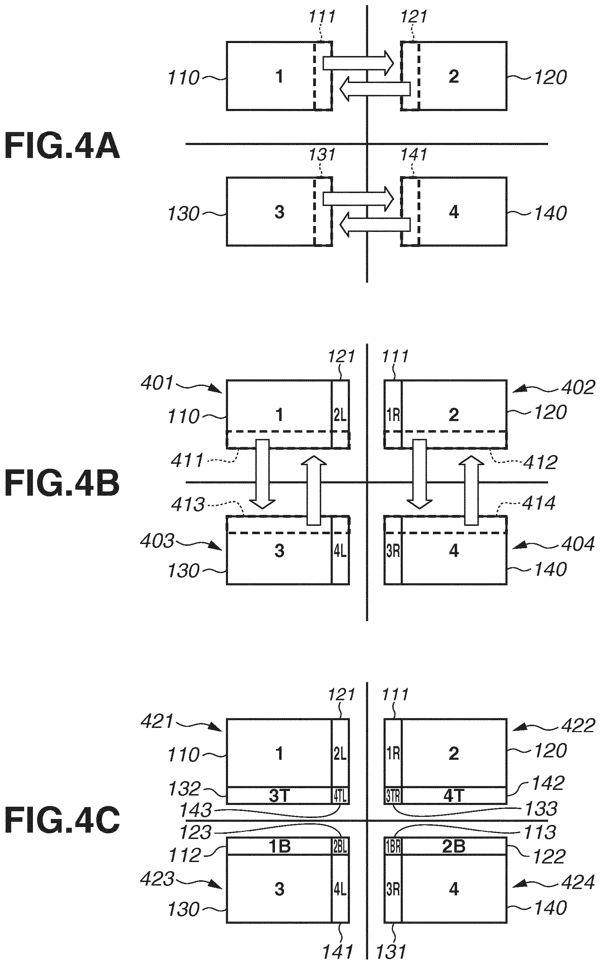

Figs. 4A, 4B, and 4C are diagrams illustrating an example of a method for transmitting and receiving image data of overlap regions between image processing apparatuses.

Fig. 4A illustrates image data held in the image processing apparatuses 101 to 104 at a first stage. The first stage is a stage before the transmission and reception of the image data 111, 121, 131, and 141 of the overlap regions 1R, 2L, 3R, and 4L, which are first overlap regions. At this stage, image data held in the image processing apparatus 101 is only the divided image data 110, which is the original input data. Similarly, image data held in the image processing apparatus 102 is only the divided image data 120, which is the original input data. Image data held in the image processing apparatus 103 is only the divided image data 130, which is the original input data. Image data held in the image processing apparatus 104 is only the divided image data 140, which is the original input data. As a result of the transmission and reception between the image processing apparatuses by first image transfer, the image data 111, 121, 131, and 141 of overlap regions surrounded by dashed lines in Fig. 4A is transferred to the other image processing apparatuses.

Fig. 4B illustrates image data held in the image processing apparatuses 101 to 104 at a second stage, which follows the first stage. The second stage is a stage after the transmission and reception of the image data 111, 121, 131, and 141 are completed by the first image transfer and before the transmission and reception of image data 411, 412, 413, and 414 of second overlap regions are started. The image data 411 includes the image data of the overlap regions 1B and 2BL. The image data 412 includes the image data of the overlap regions 2B and 1BR. The image data 413 includes the image data of the overlap regions 3T and 4TL. The image data 414 includes the image data of the overlap regions 4T and 3TR. At this stage, image data 401 held in the image processing apparatus 101 is the divided image data 110 and the image data 121 of the overlap region 2L. Similarly, image data 402 held in the image processing apparatus 102 is the divided image data 120 and the image data 111 of the overlap region 1R. Image data 403 held in the image processing apparatus 103 is the divided image data 130 and the image data 141 of the overlap region 4L. Image data 404 held in the image processing apparatus 104 is the divided image data 140 and the image data 131 of the overlap region 3R. As a result of the transmission and reception between the image processing apparatuses by second image transfer, the image data 411, 412, 413, and 414 of overlap regions surrounded by dashed lines in Fig. 4B is transferred to the other image processing apparatuses.

Fig. 4C illustrates image data held in the image processing apparatuses 101 to 104 at a third stage, which follows the second stage. The third stage is a stage after the transmission and reception of the image data 411, 412, 413, and 414 of the second overlap regions are completed by the second image transfer. At this stage, image data 421 held in the image processing apparatus 101 is the divided image data 110 and the image data 121, 132, and 143 of the overlap regions 2L, 3T, and 4TL. In this state, all image data necessary for image processing is complete. Similarly, image data 422 held in the image processing apparatus 102 is the divided image data 120 and the image data 111, 133, and 142 of the overlap regions 1R, 3TR, and 4T. Image data 423 held in the image processing apparatus 103 is the divided image data 130 and the image data 112, 123, and 141 of the overlap regions 1B, 2BL, and 4L. Image data 424 held in the image processing apparatus 104 is the divided image data 140 and the image data 113, 122, and 131 of the overlap regions 1BR, 2B, and 3R. If the first transfer and the second transfer are thus completed, all image data necessary for image processing is complete in the image processing apparatuses 101 to 104.

In the present exemplary embodiment, regarding the divided image data 110, an edge included in the divided image data 110 and adjacent to the divided image data 120 is an example of a first edge, and the divided image data 120 is an example of a first adjacent divided image. Further, an edge included in the divided image data 110 and adjacent to the divided image data 130 is an example of a second edge, and the divided image data 130 is an example of a second adjacent divided image. Further, the image data 121, 132, and 143 is examples of images of peripheral regions of the divided image data 110. Regarding the divided image data 120, an edge included in the divided image data 120 and adjacent to the divided image data 110 is an example of a first edge, and the divided image data 110 is an example of a first adjacent divided image. Further, an edge included in the divided image data 120 and adjacent to the divided image data 140 is an example of a second edge, and the divided image data 140 is an example of a second adjacent divided image. Further, the image data 111, 133, and 142 is examples of images of peripheral regions of the divided image data 120. Regarding the divided image data 130, an edge included in the divided image data 130 and adjacent to the divided image data 140 is an example of a first edge, and the divided image data 140 is an example of a first adjacent divided image. Further, an edge included in the divided image data 130 and adjacent to the divided image data 110 is an example of a second edge, and the divided image data 110 is an example of a second adjacent divided image. Further, the image data 112, 123, and 141 is examples of images of peripheral regions of the divided image data 130. Regarding the divided image data 140, an edge included in the divided image data 140 and adjacent to the divided image data 130 is an example of a first edge, and the divided image data 130 is an example of a first adjacent divided image. Further, an edge included in the divided image data 140 and adjacent to the divided image data 120 is an example of a second edge, and the divided image data 120 is an example of a second adjacent divided image. Further, the image data 113, 122, and 131 is examples of images of peripheral regions of the divided image data 140.

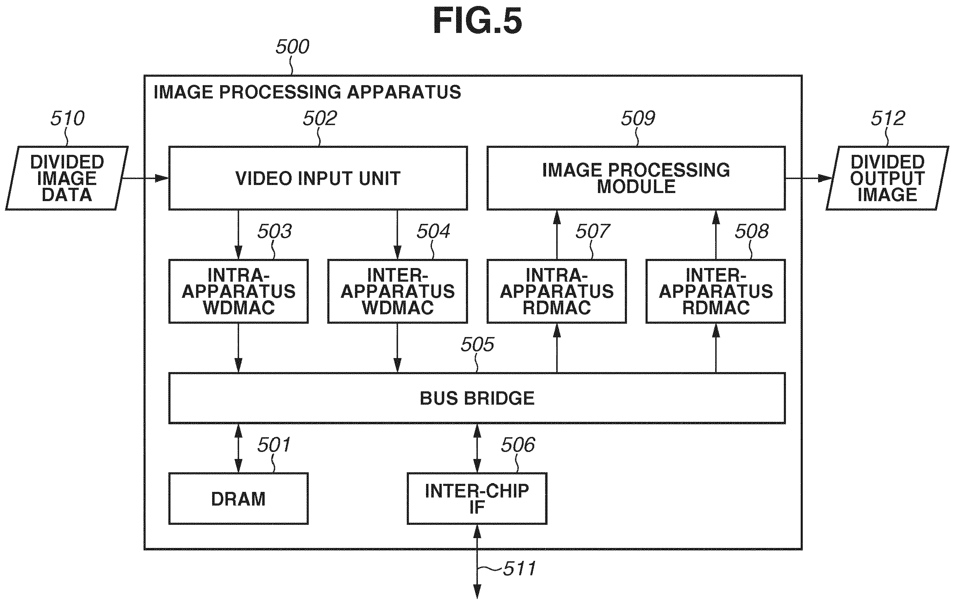

Fig. 5 is a diagram illustrating an example of the configuration of each of the image processing apparatuses 101 to 104. An image processing apparatus 500 illustrated in Fig. 5 is similar to the image processing apparatuses 101 to 104 illustrated in Fig. 1A. The image processing apparatuses 101 to 104 can thus be achieved with similar configurations. A single image processing system is achieved using as many image processing apparatuses 500 as the number of divisions of the image data 100.

Divided image data 510 is input to the image processing apparatus 500. As described above, the divided image data 510 is image data obtained by dividing a single piece of image data into a plurality of regions. The image processing apparatus 500 transmits and receives, via an inter-apparatus transmission path 511, image data of overlap regions that need to be referenced by the image processing apparatus itself and the other image processing apparatuses. Then, the image processing apparatus 500 outputs a divided output image 512, which is image data subjected to image processing. The divided image data 510 is similar to the divided image data 110, 120, 130, and 140 illustrated in Fig. 1A. Further, the divided output image 512 is similar to the divided output images 150, 160, 170, and 180 illustrated in Fig. 1A.

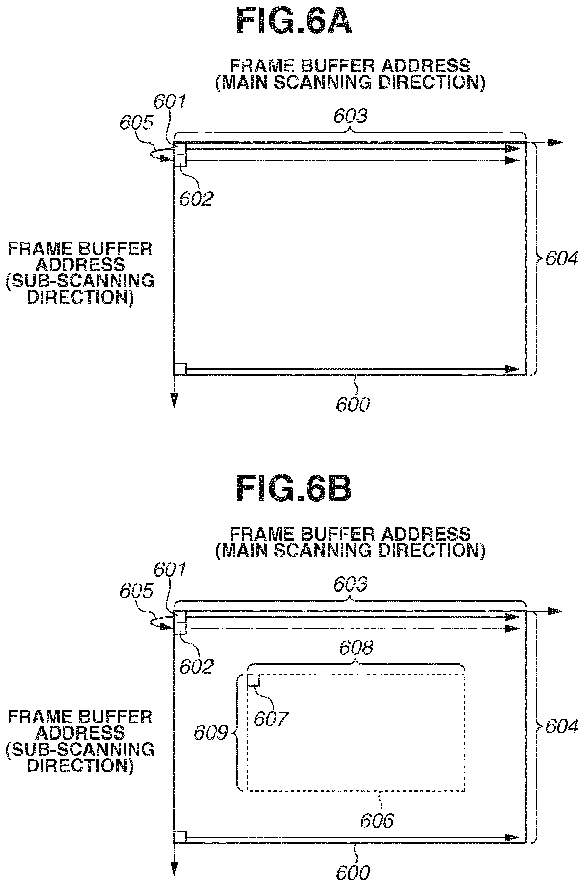

A dynamic random-access memory (DRAM) 501 is a main memory including a frame buffer for holding image data. With reference to Figs. 6A and 6B, an example of the storage format of the frame buffer in the DRAM 501 is described. Fig. 6A is a diagram illustrating an example of the placement of the frame buffer in the DRAM 501. Although Figs. 6A and 6B illustrate the frame buffer on two dimensions, the storage location of data is specified by a one-dimensional address in an actual DRAM. A frame buffer 600 sequentially stores, at memory addresses sequentially updated in ascending order, data of a row of pixels of a certain single line in the main scanning direction of an image. Further, the frame buffer 600 sequentially stores, at memory addresses obtained by adding an offset for a single line to the above memory addresses, data of pixels in the sub-scanning direction of the image. The specific placement of the frame buffer 600 in the DRAM memory space is determined by a start address 601, a line size 603, the number of lines 604, and a line offset 605. The line offset 605 does not necessarily need to match the line size 603. A start address 602 of the second line of the frame buffer 600 can be calculated by adding the line offset 605 to the start address 601 of the first line. Further, the address of a particular pixel in a certain line can be calculated from the data size of a single pixel. In other words, the frame buffer 600 is placed in the DRAM 501 in the format illustrated in Fig. 6A, whereby it is possible to access any pixel of image data stored in the frame buffer 600.

Fig. 6B is a conceptual diagram illustrating an example of the state where image data is stored in the frame buffer 600 in the format described with reference to Fig. 6A. Fig. 6B illustrates as an example a case where image data 606 is stored at a position determined by a start address 607, a line size 608, and the number of lines 609 of a certain frame buffer 600. The line offset 605 is determined when the format of the frame buffer 600 is defined. As illustrated in Fig. 6B, image data can be stored at any position in the frame buffer 600.

The start address 601 described with reference to Figs. 6A and 6B may not be aligned to DRAM access. For example, if DRAM access is aligned in units of 16 bytes (128 bits), and the size of image data of a single pixel is 3 bytes (1 byte for each of red, green, and blue (RGB)), the start address of a certain pixel may not be aligned to 16 bytes. In this case, to write to the frame buffer 600 a pixel that is not aligned to 16 bytes, it is also necessary to write data of another pixel immediately before the pixel together. Thus, to write a pixel that is not aligned, for example, it is necessary to perform the process of once writing data of the pixel in a region other than the frame buffer as the writing destination, and then reading and combining data of another pixel immediately before the pixel and the data of the pixel. Further, in a case where a controller for DRAM access is compatible with byte-by-byte access (byte enable access), then to write data that is not aligned, it is necessary to not update data of a pixel for which byte enable is off. Similarly, to read data of a pixel that is not aligned to the DRAM from the frame buffer, it is necessary to start reading data from data of an aligned pixel immediately before a pixel of which the reading is to be started, and ignore unnecessary data in the read data when the unnecessary data is received. Using the frame buffer 600 in the above format, it is possible to achieve the writing of image data of overlap regions to be referenced by the other image processing apparatuses and the reading of image data of overlap regions from the frame buffers of the other image processing apparatuses.

Referring back to Fig. 5, a video input unit 502 receives the divided image data 510 and transmits the divided image data 510 to an intra-apparatus write direct memory access controller (WDMAC) 503. The video input unit 502 transmits the divided image data 510 and also transmits, in the divided image data 510, data of a neighboring portion at a boundary adjacent to another piece of divided image data in the horizontal direction, as image data of an overlap region to an inter-apparatus WDMAC 504.

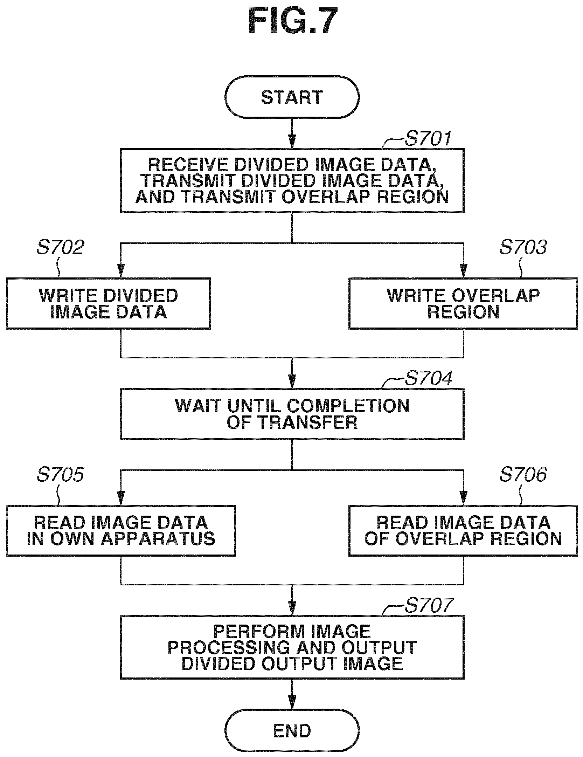

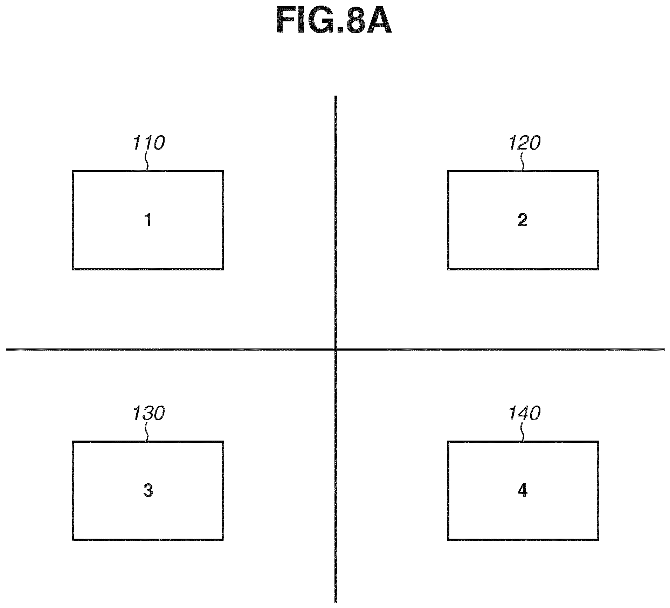

The intra-apparatus WDMAC 503 transmits the divided image data 510 received from the video input unit 502 to the frame buffer 600 in the DRAM 501 of the image processing apparatus 500. This transmission of the divided image data 510 is performed based on, for example, transfer information set by a control device such as a central processing unit (CPU) (not illustrated). The transfer information is information including the start address, the line size, and the number of lines of image data in the frame buffer 600, which is the storage location of the image data. The positional relationship of image data to be stored in the frame buffer 600 will be described below with reference to Figs. 7 and 8A to 8I.

The inter-apparatus WDMAC 504 transmits the image data of the overlap region received from the video input unit 502 to the frame buffer 600 in the DRAM 501 of another image processing apparatus via a bus bridge 505 and an inter-chip interface (IF) 506. This transmission is performed based on, for example, transfer information set by the control device such as the CPU (not illustrated). The image processing apparatus as the transfer destination of the image data of the overlap region by the inter-apparatus WDMAC 504 and the positional relationship between the image data of the overlap region stored in the frame buffer 600 and another piece of image data will be described below with reference to Figs. 7 and 8A to 8I. In the present exemplary embodiment, the configuration is such that the intra-apparatus WDMAC 503 and the inter-apparatus WDMAC 504 are separate from each other. Alternatively, the present exemplary embodiment can also be carried out by making these WDMACs common for use in a time division manner.

The bus bridge 505 connects the intra-apparatus WDMAC 503, the inter-apparatus WDMAC 504, an intra-apparatus read direct memory access controller (RDMAC) 507, an inter-apparatus RDMAC 508, the DRAM 501, and the inter-chip IF 506 to each other. The bus bridge 505 distributes access from the DMACs 503, 504, 507, and 508 and the inter-chip IF 506, which perform memory access, to the DRAM 501 or the inter-chip IF 506 according to the transmission destination address of the access.

The inter-chip IF 506 is a communication interface unit for data transfer between the inside and the outside of the image processing apparatus 500. In a case where PCIe is employed as a transmission path between image processing apparatuses, the inter-chip IF 506 is configured using a physical layer (PHY), a media access control (MAC) layer, and a controller of PCIe. The inter-apparatus transmission path 511, which is connected to the inter-chip IF 506, is similar to the inter-apparatus transmission paths 105 to 108 in Fig. 1A. Although Fig. 5 illustrates the inter-apparatus transmission path 511 as a single line, it is possible to secure as many inter-apparatus transmission paths 511 as the number of image processing apparatuses connected to the image processing apparatus 500. For example, in a case where the inter-apparatus transmission path 511 is achieved using PCIe, and connections with two image processing apparatuses are required, it is possible to secure a 2-link transmission path. In a case where connections with four image processing apparatuses are required, it is possible to secure a 4-link transmission path.

The intra-apparatus RDMAC 507 reads image data from the frame buffer 600 in the DRAM 501 of the image processing apparatus 500. This reading is performed based on, for example, transfer information set by the control device such as the CPU (not illustrated). With reference to Figs. 7 and 8A to 8I, a description will be given below of which portion of image data stored in the frame buffer 600 the image data to be read corresponds to. Then, the intra-apparatus RDMAC 507 transmits the read image data to an image processing module 509.

The inter-apparatus RDMAC 508 reads image data of overlap regions from the frame buffers 600 in the DRAMs 501 of the other image processing apparatuses. This reading is performed based on, for example, transfer information set by the control device such as the CPU (not illustrated). With reference to Figs. 7 and 8A to 8I, a description will be given below of which portions in the frame buffers of which image processing apparatuses the image data of the overlap regions to be read is stored in. Then, the inter-apparatus RDMAC 508 transmits the read image data of the overlap regions to the image processing module 509. In the present exemplary embodiment, the configuration is such that the intra-apparatus RDMAC 507 and the inter-apparatus RDMAC 508 are separate from each other. Alternatively, the present exemplary embodiment can also be carried out by making these RDMACs common for use in a time division manner.

The image processing module 509 executes image processing including a filter process on the image data ((the entirety of) the divided image data and the image data of the overlap regions) received from the intra-apparatus RDMAC 507 and the inter-apparatus RDMAC 508 and outputs the divided output image 512.

Next, with reference to Figs. 7 and 8A to 8I, a description is given of examples of the operations of the DMACs 503, 504, 507, and 508 in the image processing apparatus 500 according to the present exemplary embodiment. Fig. 7 is a flowchart illustrating an example of processing when the image processing apparatus 500 handles divided image data and image data of overlap regions for a single frame. Figs. 8A to 8I are diagrams illustrating examples of image data (divided image data and image data of overlap regions) to be written and read by the DMACs 503, 504, 507, and 508 of the image processing apparatus 500 in steps in Fig. 7.

In step S701, the video input unit 502 of each of the image processing apparatuses 101 to 104 receives the divided image data 510 and transmits the divided image data 510 and image data of an overlap region. The video input units 502 of the image processing apparatuses 101 to 104 receive divided image data 110, 120, 130, and 140, respectively, illustrated in Fig. 8A. The video input unit 502 of the image processing apparatus 101 receives the divided image data 110. The video input unit 502 of the image processing apparatus 102 receives the divided image data 120. The video input unit 502 of the image processing apparatus 103 receives the divided image data 130. The video input unit 502 of the image processing apparatus 104 receives the divided image data 140.

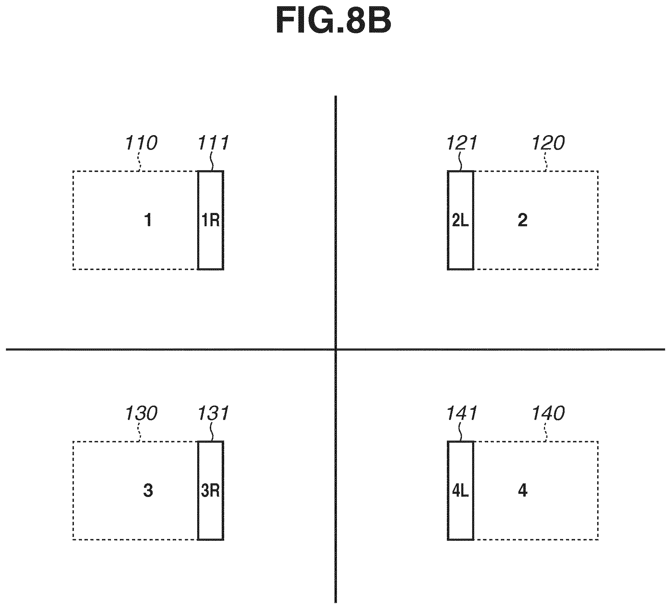

Then, the video input units 502 of the image processing apparatuses 101, 102, 103, and 104 transmit the entirety of the received divided image data 110, 120, 130, and 140, respectively, to the intra-apparatus WDMACs 503 in the image processing apparatuses in which the video input units 502 themselves are placed. Further, the video input units 502 of the image processing apparatuses 101, 102, 103, and 104 transmit image data of overlap regions, which are parts of the divided image data 110, 120, 130, and 140, respectively, to the inter-apparatus WDMACs 504 in the image processing apparatuses in which the video input units 502 themselves are placed. The divided image data 110, 120, 130, and 140 transmitted from the video input units 502 of the image processing apparatuses 101, 102, 103, and 104, respectively, to the intra-apparatus WDMACs 503 is the same as the divided image data illustrated in Fig. 8A. The image data of the overlap regions transmitted from the video input units 502 of the image processing apparatuses 101, 102, 103, and 104 to the inter-apparatus WDMACs 504 is image data 111, 121, 131, and 141, respectively, illustrated in Fig. 8B. The video input unit 502 of the image processing apparatus 101 transmits the image data 111 of an overlap region 1R illustrated in Fig. 8B in the divided image data 110 to the inter-apparatus WDMAC 504 in the image processing apparatus 101. Similarly, the video input unit 502 of the image processing apparatus 102 transmits the image data 121 of an overlap region 2L to the inter-apparatus WDMAC 504 in the image processing apparatus 102. The video input unit 502 of the image processing apparatus 103 transmits the image data 131 of an overlap region 3R to the inter-apparatus WDMAC 504 in the image processing apparatus 103. The video input unit 502 of the image processing apparatus 104 transmits the image data 141 of an overlap region 4L to the inter-apparatus WDMAC 504 in the image processing apparatus 104. If the transmission of the divided image data and the image data of the overlap region is completed, the processing proceeds to steps S702 and S703.

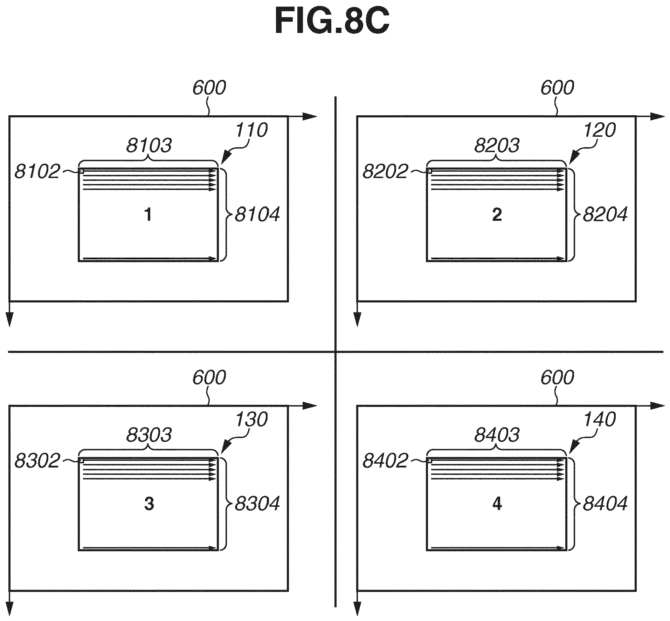

In step S702, the intra-apparatus WDMACs 503 of the image processing apparatuses 101, 102, 103, and 104 write the divided image data 110, 120, 130, and 140, respectively, to the DRAMs 501 (the frame buffers) in the image processing apparatuses in which the intra-apparatus WDMACs 503 themselves are placed. The intra-apparatus WDMACs 503 of the image processing apparatuses 101, 102, 103, and 104 receive the divided image data 110, 120, 130, and 140, respectively, illustrated in Fig. 8A. If receiving the divided image data 110, the intra-apparatus WDMAC 503 of the image processing apparatus 101 writes the entirety of the divided image data 110 to the frame buffer 600 allocated in the DRAM 501 of the image processing apparatus 101. As illustrated at the upper left of Fig. 8C, the position in the frame buffer 600 where the divided image data 110 is written is identified by, for example, a start address 8102, a line size 8103, and the number of lines 8104, which are set by the control device such as the CPU (not illustrated). The intra-apparatus WDMAC 503 of the image processing apparatus 102 writes the divided image data 120 to the frame buffer 600 allocated in the DRAM 501 of the image processing apparatus 102. As illustrated at the upper right of Fig. 8C, the position in the frame buffer 600 where the divided image data 120 is written is identified by, for example, a start address 8202, a line size 8203, and the number of lines 8204. The intra-apparatus WDMAC 503 of the image processing apparatus 103 writes the divided image data 130 to the frame buffer 600 allocated in the DRAM 501 of the image processing apparatus 103. As illustrated at the lower left of Fig. 8C, the position in the frame buffer 600 where the divided image data 130 is written is identified by a start address 8302, a line size 8303, and the number of lines 8304. The intra-apparatus WDMAC 503 of the image processing apparatus 104 writes the divided image data 140 to the frame buffer 600 allocated in the DRAM 501 of the image processing apparatus 104. As illustrated at the lower right of Fig. 8C, the position in the frame buffer 600 where the divided image data 140 is written is identified by a start address 8402, a line size 8403, and the number of lines 8404. If the writing in this step is completed, the processing proceeds to step S704.

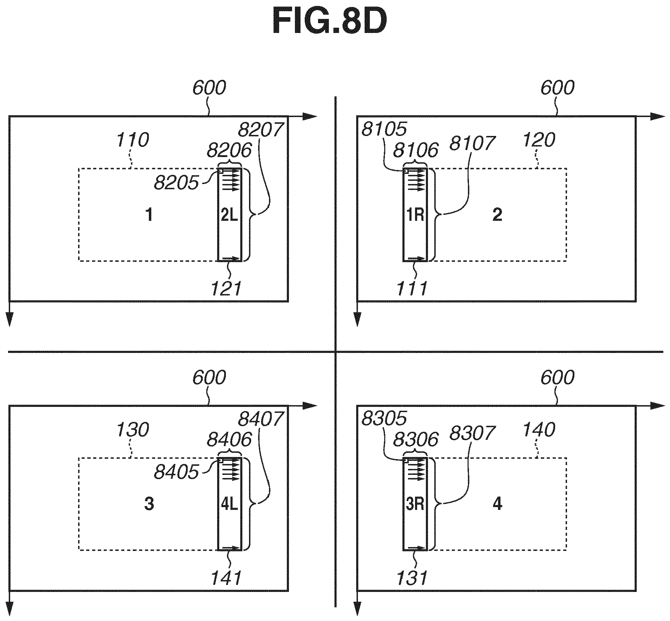

If, on the other hand, the processing proceeds from step S701 to step S703, the inter-apparatus WDMAC 504 of each of the image processing apparatuses 101 to 104 writes the image data of the overlap region. The inter-apparatus WDMACs 504 of the image processing apparatuses 101, 102, 103, and 104 receive the image data 111, 121, 131, and 141, respectively, of the overlap regions illustrated in Fig. 8B. If receiving the image data 111 of the overlap region 1R, the inter-apparatus WDMAC 504 of the image processing apparatus 101 writes the image data 111 to the frame buffer 600 allocated in the DRAM 501 of the image processing apparatus 102. The writing of the image data 111 of the overlap region 1R is performed via the bus bridge 505 and the inter-chip IF 506 of the image processing apparatus 101, the inter-apparatus transmission path 511 (105), and the inter-chip IF 506 and the bus bridge 505 of the image processing apparatus 102. As illustrated at the upper right of Fig. 8D, the writing position of the image data 111 of the overlap region 1R is identified by, for example, a start address 8105, a line size 8106, and the number of lines 8107, which are set by the control device such as the CPU (not illustrated). Further, as illustrated at the upper right of Fig. 8D, this writing position is set to a position adjacent to the left edge of the divided image data 120. Consequently, it is possible to handle the image data 111 of the overlap region 1R and the divided image data 120 as image data of a single rectangular region.

Similarly, the inter-apparatus WDMAC 504 of the image processing apparatus 102 writes the image data 121 of the overlap region 2L to the frame buffer 600 in the DRAM 501 of the image processing apparatus 101. As illustrated at the upper left of Fig. 8D, the writing position of the image data 121 of the overlap region 2L is identified by, for example, a start address 8205, a line size 8206, and the number of lines 8207. Further, this writing position is set to a position adjacent to the right edge of the divided image data 110. The inter-apparatus WDMAC 504 of the image processing apparatus 103 writes the image data 131 of the overlap region 3R to the frame buffer 600 in the DRAM 501 of the image processing apparatus 104. As illustrated at the lower right of Fig. 8D, the writing position of the image data 131 of the overlap region 3R is identified by, for example, a start address 8305, a line size 8306, and the number of lines 8307. Further, this writing position is set to a position adjacent to the left edge of the divided image data 140. The inter-apparatus WDMAC 504 of the image processing apparatus 104 writes the image data 141 of the overlap region 4L to the frame buffer 600 in the DRAM 501 of the image processing apparatus 103. As illustrated at the lower left of Fig. 8D, the writing position of the image data 141 of the overlap region 4L is identified by, for example, a start address 8405, a line size 8406, and the number of lines 8407. Further, this writing position is set to a position adjacent to the right edge of the divided image data 130. If the writing in this step is completed, the processing proceeds to step S704.

In step S704, the control device such as the CPU (not illustrated) of each of the image processing apparatuses 101 to 104 waits for the completion of the transfer of the divided image data and the image data of the overlap region by the intra-apparatus WDMAC 503 and the inter-apparatus WDMAC 504. For example, if receiving completion notifications using interrupt signals from both the intra-apparatus WDMAC 503 and the inter-apparatus WDMAC 504, the control device determines that the transfer of the divided image data and the image data of the overlap region is completed. Further, the control device may make this determination by performing polling to monitor a register indicating the completion of the transfer of the divided image data and the image data of the overlap region by the intra-apparatus WDMAC 503 and the inter-apparatus WDMAC 504.

A description is given of the latencies of the transfer of the divided image data by the intra-apparatus WDMAC 503 and the transfer of the image data of the overlap region by the inter-apparatus WDMAC 504 until the completion of the transfer. The intra-apparatus WDMAC 503 transfers the divided image data, via the bus bridge 505 in the image processing apparatus in which the intra-apparatus WDMAC 503 itself is placed, to the DRAM 501 in the image processing apparatus. On the other hand, the inter-apparatus WDMAC 504 transfers the image data of the overlap region to the DRAM 501 in the image processing apparatus as the transfer destination. At this time, the transfer is performed via the bus bridge 505 and the inter-chip IF 506 in the image processing apparatus in which the inter-apparatus WDMAC 504 itself is placed, the inter-apparatus transmission path 511, and the inter-chip IF 506 and the bus bridge 505 of the image processing apparatus as the transfer destination. By comparison, the latency of the transfer by the inter-apparatus WDMAC 504 is greater than the latency of the transfer by the intra-apparatus WDMAC 503. Further, generally, data transfer inside system LSI and data transfer to outside the system LSI compete with other transfer, and variation arises in the latencies. In the present exemplary embodiment, the intra-apparatus WDMAC 503 and inter-apparatus WDMAC 504 write to the frame buffers 600 in the DRAMs 501, and there is sufficient capacity in the data transfer destinations. Thus, the difference between the latencies and the variation in the latencies are less often a problem in carrying out the present exemplary embodiment. However, in a case where each data transfer destination is a line buffer including a static random-access memory (SRAM) and has small capacity, a design for absorbing this difference between the latencies is required. For example, transfer control taking into account the difference between the latencies is required, and the capacity of the line buffer including an SRAM needs to be of a size capable of absorbing the difference between the latencies and the variation in the latencies.

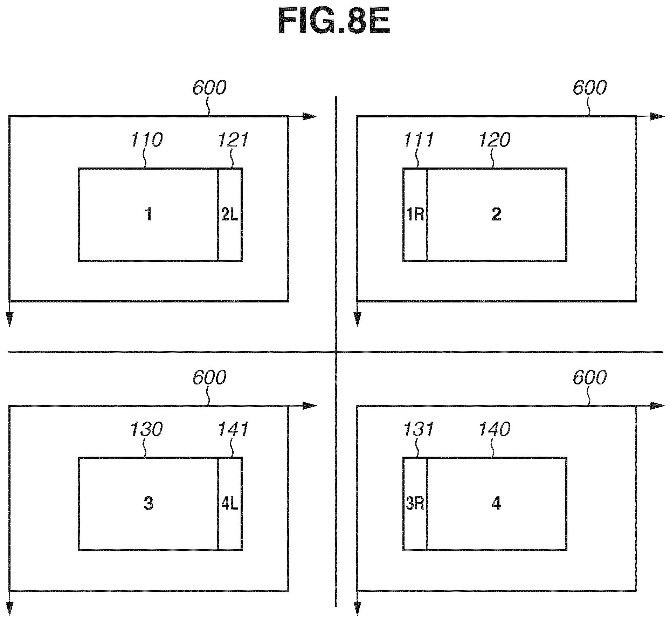

If, as a result of step S704, it is determined that the transfer of the divided image data and the image data of the overlap region is completed, image data illustrated in Fig. 8E is present in the frame buffer 600 in the DRAM 501 of each of the image processing apparatuses 101 to 104 in this state. As illustrated at the upper left of Fig. 8E, the divided image data 110, which is an input to the image processing apparatus 101, and the image data 121 of the overlap region 2L, which is a part of an input to the image processing apparatus 102, are present in the frame buffer 600 of the image processing apparatus 101. Further, image data as illustrated at the upper right, the lower left, and the lower right of Fig. 8E is present in the frame buffers 600 of the image processing apparatuses 102 to 104, respectively. More specifically, the divided image data 120, 130, and 140, which is inputs to the image processing apparatus 102 to 104, and the image data 111, 141, and 131 of the overlap regions 1R, 4L, and 3R, which is adjacent to the divided image data 120, 130, and 140 in the horizontal direction, are present in the frame buffers 600 of the image processing apparatuses 102 to 104, respectively. If, as a result of step S704, it is determined that the transfer of the divided image data and the image data of the overlap region is completed, the processing proceeds to steps S705 and S706.

In steps S705 and S706, the intra-apparatus RDMAC 507 and the inter-apparatus RDMAC 508 of each of the image processing apparatuses 101 to 104 reads image data necessary for image processing to be performed by the image processing apparatus from the image processing apparatus and the other image processing apparatuses. The image processing module 509 handles the image data read in steps S705 and S706 as a single piece of image data when performing image processing. Thus, the intra-apparatus RDMAC 507 and the inter-apparatus RDMAC 508 need to read image data so that the read image data can be handled as a single piece of image data. As described above, the latency of data transfer in an image processing apparatus and the latency of data transfer between image processing apparatuses are different from each other, and variation also arises in the latencies. Thus, transfer control taking into account the reading latency between image processing apparatuses and a buffer for absorbing fluctuations in the reading latency between image processing apparatuses are required.

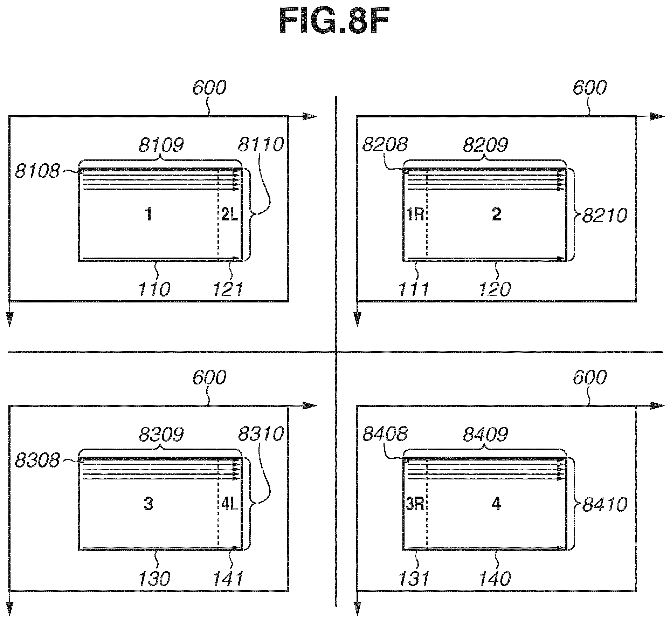

In step S705, the intra-apparatus RDMAC 507 of each of the image processing apparatuses 101 to 104 reads image data from the frame buffer 600 in the DRAM 501 of the image processing apparatus (the own apparatus) in which the intra-apparatus RDMAC 507 itself is placed. With reference to Fig. 8F, an example of this operation is described. As illustrated at the upper left of Fig. 8F, the intra-apparatus RDMAC 507 of the image processing apparatus 101 reads image data obtained by combining the divided image data 110 and the image data 121 of the overlap region 2L from the frame buffer 600 in the DRAM 501 of the image processing apparatus 101. The reading position of this image data is identified by a start address 8108, a line size 8109, and the number of lines 8110, which are set by the control device such as the CPU (not illustrated). Similarly, as illustrated at the upper right of Fig. 8F, the intra-apparatus RDMAC 507 of the image processing apparatus 102 reads image data obtained by combining the divided image data 120 and the image data 111 of the overlap region 1R from the frame buffer 600 of the image processing apparatus 102. At this time, the reading position is identified by a start address 8208, a line size 8209, and the number of lines 8210. As illustrated at the lower left of Fig. 8F, the intra-apparatus RDMAC 507 of the image processing apparatus 103 reads image data obtained by combining the divided image data 130 and the image data 141 of the overlap region 4L from the frame buffer 600 of the image processing apparatus 103. At this time, the reading position is identified by a start address 8308, a line size 8309, and the number of lines 8310. As illustrated at the lower right of Fig. 8F, the intra-apparatus RDMAC 507 of the image processing apparatus 104 reads image data obtained by combining the divided image data 140 and the image data 131 of the overlap region 3R from the frame buffer 600 of the image processing apparatus 104. At this time, the reading position is identified by a start address 8408, a line size 8409, and the number of lines 8410. After the reading of the image data in the own apparatus in this step, the process of step S707 is performed.

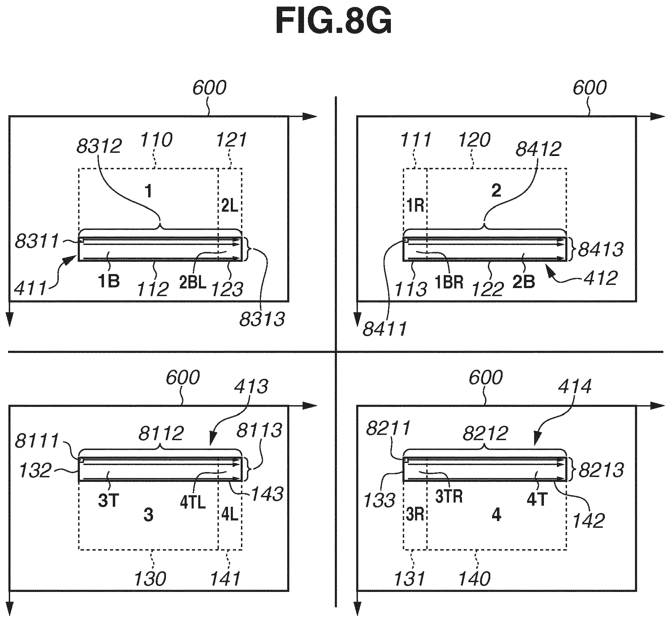

In step S706, the inter-apparatus RDMAC 508 of each of the image processing apparatuses 101 to 104 reads image data from the frame buffer 600 of another image processing apparatus. With reference to Fig. 8G, an example of this operation is described. As illustrated at the lower left of Fig. 8G, the inter-apparatus RDMAC 508 of the image processing apparatus 101 reads image data 413 of an overlap region from the frame buffer 600 in the image processing apparatus 103. The image data 413 is, in the image data obtained by combining the divided image data 130 and the image data 141 of the overlap region 4L in the frame buffer 600 in the DRAM 501 of the image processing apparatus 103, image data necessary for image processing to be performed by the image processing apparatus 101. More specifically, the image data 413 is image data obtained by combining image data 132 of an overlap region 3T and image data 143 of an overlap region 4TL. Further, the reading position of the image data 413 is identified by a start address 8111, a line size 8112, and the number of lines 8113, which are set by the control device such as the CPU (not illustrated).

Similarly, as illustrated at the lower right of Fig. 8G, the inter-apparatus RDMAC 508 of the image processing apparatus 102 reads image data 414 of an overlap region from the frame buffer 600 in the image processing apparatus 104. The image data 414 is image data obtained by combining image data 142 of an overlap region 4T and image data 133 of an overlap region 3TR, which are necessary for image processing to be performed by the image processing apparatus 102. The reading position of the image data 414 is identified by a start address 8211, a line size 8212, and the number of lines 8213. As illustrated at the upper left of Fig. 8G, the inter-apparatus RDMAC 508 of the image processing apparatus 103 reads image data 411 of an overlap region from the frame buffer 600 in the image processing apparatus 101. The image data 411 is image data obtained by combining image data 112 of an overlap region 1B and image data 123 of an overlap region 2BL, which are necessary for image processing to be performed by the image processing apparatus 103. The reading position of the image data 411 is identified by a start address 8311, a line size 8312, and the number of lines 8313. As illustrated at the upper right of Fig. 8G, the inter-apparatus RDMAC 508 of the image processing apparatus 104 reads image data 412 of an overlap region from the frame buffer 600 in the image processing apparatus 102. The image data 412 is image data obtained by combining image data 122 of an overlap region 2B and image data 113 of an overlap region 1BR, which are necessary for image processing to be performed by the image processing apparatus 104. The reading position of the image data 412 is identified by a start address 8411, a line size 8412, and the number of lines 8413. After the reading of the image data of the overlap region in this step, the process of step S707 is performed.

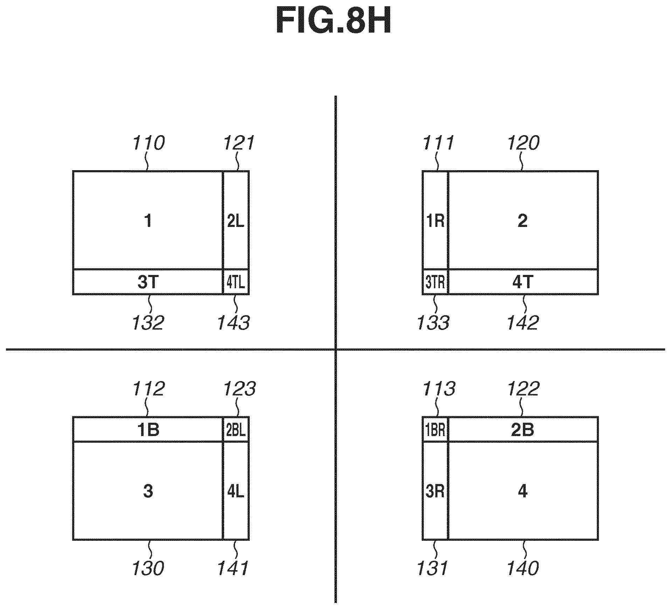

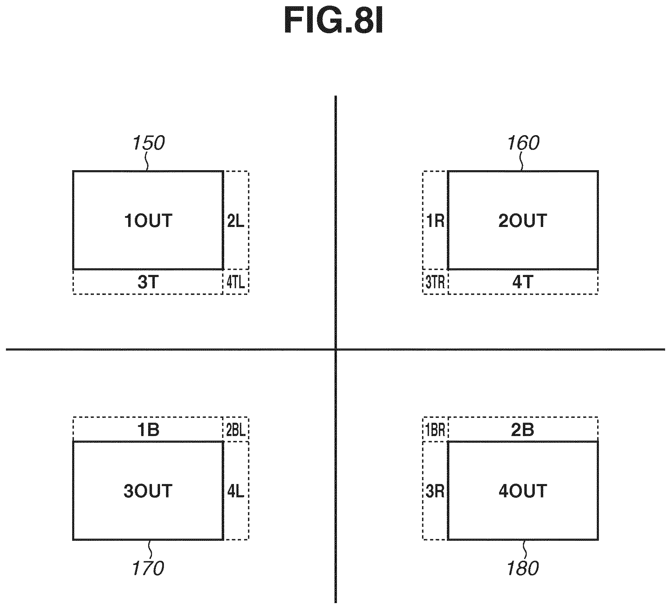

In step S707, the image processing module 509 of each of the image processing apparatuses 101 to 104 performs image processing on the image data read in steps S705 and S706 by the intra-apparatus RDMAC 507 and the inter-apparatus RDMAC 508 in the image processing apparatus in which the image processing module 509 itself is placed. Then, the image processing modules 509 of the image processing apparatuses 101, 102, 103, and 104 output images resulting from the image processing as divided output images 150, 160, 170, and 180, respectively. At the upper left, the upper right, the lower left, and the lower right of Fig. 8H, examples of the image data received by the image processing modules 509 of the image processing apparatuses 101, 102, 103, and 104, respectively, are illustrated. The image processing module 509 of the image processing apparatus 101 receives the image data 121, 132, and 143 of the overlap regions 2L, 3T, and 4TL as reference regions for image processing, in addition to the divided image data 110, which is image data input to the image processing apparatus 101. Then, the image processing module 509 of the image processing apparatus 101 performs image processing including a filter process on the divided image data 110 using the received image data and outputs image data subjected to the image processing as the divided output image 150. Similarly, the image processing module 509 of the image processing apparatus 102 outputs the divided output image 160. The image processing module 509 of the image processing apparatus 103 outputs the divided output image 170. The image processing module 509 of the image processing apparatus 104 outputs the divided output image 180. At the upper left, the upper right, the lower left, and the lower right of Fig. 8I, examples of the divided output images 150, 160, 170, and 180 output from the image processing modules 509 of the image processing apparatuses 101, 102, 103, and 104, respectively, are conceptually illustrated.

By executing the processing in the flowchart illustrated in Fig. 7, the image processing apparatuses 101 to 104 can perform image processing including a filter process on the divided image data 110, 120, 130, and 140 input to the image processing apparatuses 101 to 104 themselves, and output the divided output images 150, 160, 170, and 180, respectively.

As described above, in the present exemplary embodiment, the image data 121, 111, 141, and 131 of the overlap regions of the divided image data 120, 110, 140, and 130 adjacent to the divided image data 110, 120, 130, and 140, respectively, in the horizontal direction is acquired. Then, the image data 132, 142, 112, and 122 of the overlap regions of the divided image data 130, 140, 110, and 120 adjacent to the divided image data 110, 120, 130, and 140, respectively, in the vertical direction is acquired. At this time, in the divided image data 140, 130, 120, and 110, the image data 143, 133, 123, and 113 of the overlap regions adjacent to the divided image data 110, 120, 130, and 140, respectively, in the oblique direction is also acquired.

Thus, inter-chip interfaces may only need to be provided between image processing apparatuses for handling pieces of image data adjacent to each other in the horizontal and vertical directions, and inter-chip interfaces between image processing apparatuses for handling pieces of image data adjacent to each other in oblique directions can be unnecessary. Consequently, it is possible to reduce the number of pins of system LSI and the number of branches of an external PCIe switch and therefore reduce the cost of such pins and branches. Further, a special apparatus such as a processing apparatus for collectively handling inputs of a plurality of image signals is not necessary at a stage prior to the image processing apparatuses. Thus, it is possible to reduce the cost of such a special apparatus. For example, a processing apparatus for adding an overlap region does not need to be provided using a field programmable gate array (FPGA) or an application-specific integrated circuit (ASIC) at a stage prior to system LSI as the image processing apparatuses. Thus, it is possible to achieve with a simple configuration a technique in which, when a single image is divided into a plurality of images, and separate image processing apparatuses process the divided images, each image processing apparatus references an image adjacent to the image to be processed by the image processing apparatus. Thus, it is possible to reduce the cost.

Next, a second exemplary embodiment is described. In the first exemplary embodiment, each image processing apparatus writes, to the DRAM 501, image data of an overlap region necessary for another image processing apparatus to perform image processing and also reads, from the DRAM 501 of another image processing apparatus, image data of an overlap region necessary for the image processing apparatus to perform image processing. In contrast, in the present exemplary embodiment, each image processing apparatus copies image data of an overlap region necessary for another image processing apparatus to perform image processing and image data of an overlap region necessary for the image processing apparatus to perform image processing. As described above, the present exemplary embodiment is different from the first exemplary embodiment mainly in the handling of image data of overlap regions. Thus, in the description of the present exemplary embodiment, portions similar to those of the first exemplary embodiment are designated by the same numerals as those in Figs. 1A to 8I, and are not described in detail.

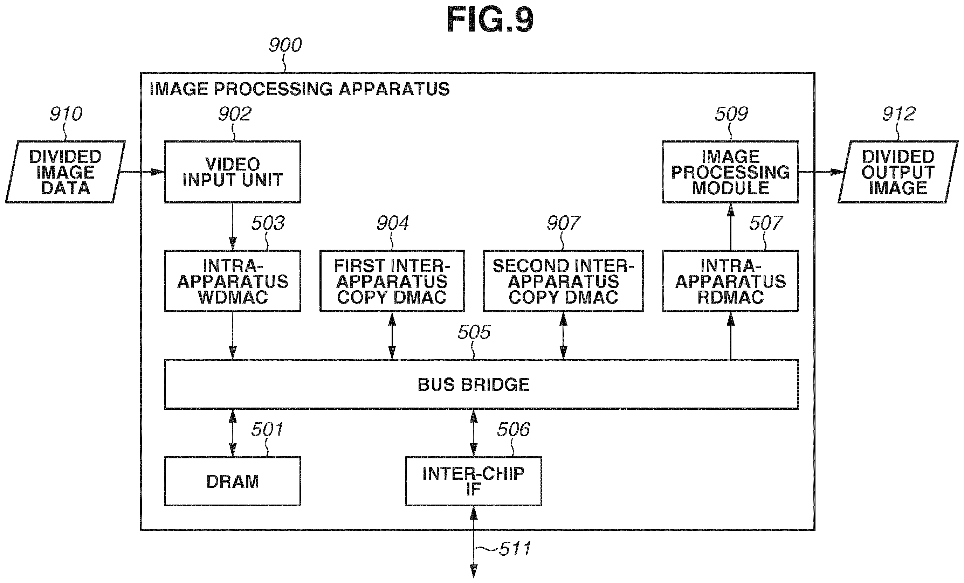

Fig. 9 is a diagram illustrating an example of the configuration of each of the image processing apparatuses 101 to 104. The configuration of an image processing system using image processing apparatuses according to the present exemplary embodiment is similar to that illustrated in Fig. 1A. Further, in the image processing apparatuses and the image processing system according to the present exemplary embodiment, the transmission and reception of divided image data and image data of overlap regions between the image processing apparatuses are similar to those described with reference to Figs. 4A to 4C in the first exemplary embodiment. In the following description of the present exemplary embodiment, an image processing apparatus 900 illustrated in Fig. 9 is similar to the image processing apparatuses 101 to 104 illustrated in Fig. 1A, and the image processing apparatuses 101 to 104 can be achieved with similar configurations. A single image processing system is achieved using as many image processing apparatuses 900 as the number of divisions of the image data 100.

Divided image data 910 is input to the image processing apparatus 900. Then, the image processing apparatus 900 transmits and receives, via an inter-apparatus transmission path 511, image data of overlap regions that need to be referenced by the image processing apparatus itself and the other image processing apparatuses. Then, the image processing apparatus 900 outputs a divided output image 912, which is image data subjected to image processing. The divided image data 910 is similar to the divided image data 110, 120, 130, and 140 illustrated in Fig. 1A. Further, the divided output image 912 is similar to the divided output images 150, 160, 170, and 180 illustrated in Fig. 1A.

A DRAM 501, an intra-apparatus WDMAC 503, a bus bridge 505, an inter-chip IF 506, an intra-apparatus RDMAC 507, an image processing module 509, and the inter-apparatus transmission path 511 are similar to those illustrated in Fig. 5.

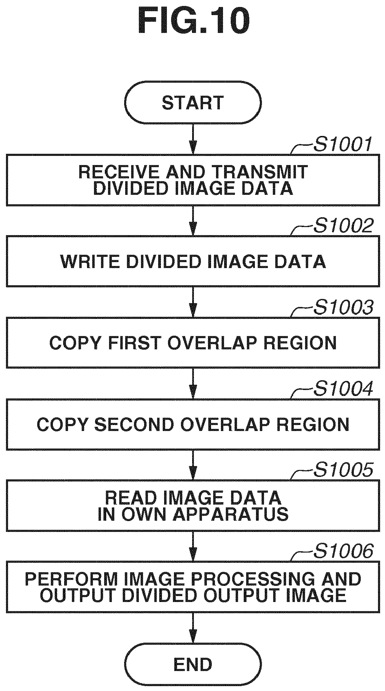

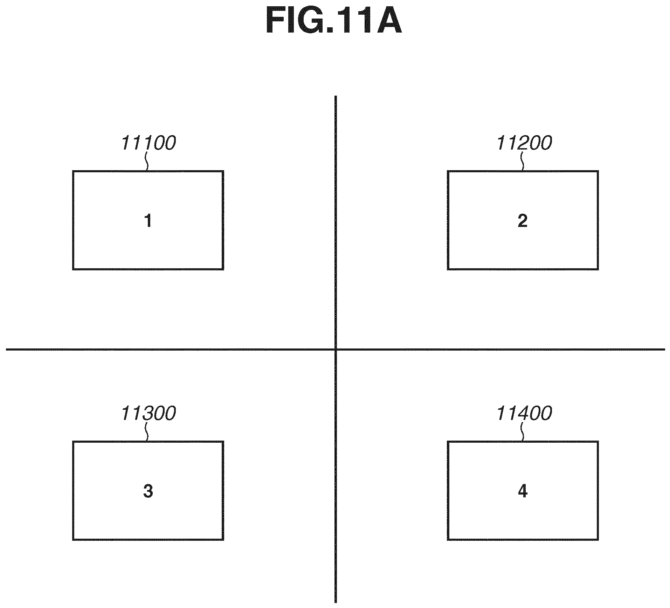

A video input unit 902 receives the divided image data 910 and transmits the divided image data 910 to the intra-apparatus WDMAC 503. A first inter-apparatus copy DMAC 904 and a second inter-apparatus copy DMAC 907 copy image data between frame buffers in the DRAMs 501 of image processing apparatuses 900. This copying of the image data is performed based on, for example, transfer information set by a control device such as a CPU (not illustrated). With reference to Figs. 10 and 11A to 11J, image processing apparatuses and portions in the frame buffers of the image processing apparatuses to which the copy source and the copy destination of the image data correspond will be described.

With reference to Figs. 10 and 11A to 11J, a description is given of examples of the operations of the DMACs 503, 507, 904, and 907 in the image processing apparatus 900 according to the present exemplary embodiment. Fig. 10 is a flowchart illustrating an example of processing when the image processing apparatus 900 handles divided image data and image data of overlap regions for a single frame. Figs. 11A to 11J are diagrams illustrating examples of image data (divided image data and image data of overlap regions) to be written and read by the DMACs 503, 507, 904, and 907 of the image processing apparatus 900 in steps in Fig. 10.

In step S1001, the video input unit 902 of each of the image processing apparatuses 101 to 104 receives the divided image data 910 and transmits the received divided image data 910 to the intra-apparatus WDMAC 503 in the image processing apparatus in which the video input unit 902 itself is placed. The video input units 902 of the image processing apparatuses 101, 102, 103, and 104 receive divided image data 11100, 11200, 11300, and 11400, respectively, illustrated in Fig. 11A. Then, the video input units 902 of the image processing apparatuses 101, 102, 103, and 104 transmit the entirety of the divided image data 11100, 11200, 11300, and 11400, respectively, to the intra-apparatus WDMACs 503 in the image processing apparatuses in which the video input units 902 themselves are placed. If the transmission of the divided image data 910 is completed, the processing proceeds to step S1002.

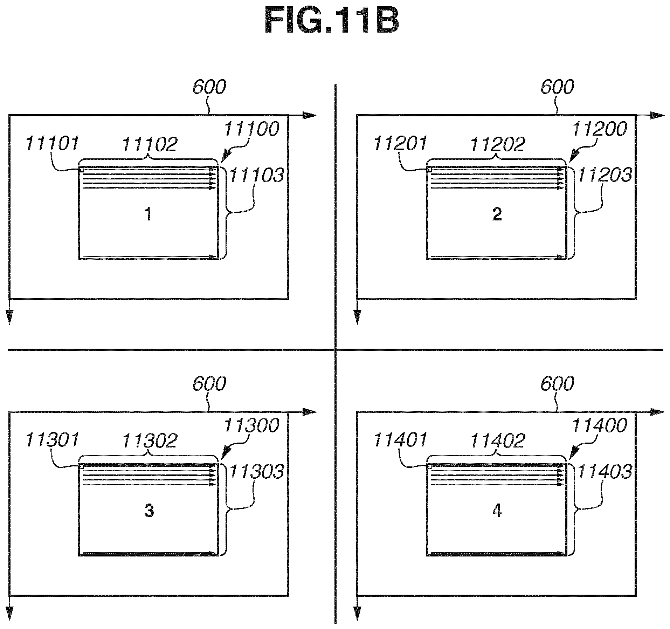

In step S1002, the intra-apparatus WDMACs 503 of the image processing apparatuses 101 to 104 write the divided image data 11100, 11200, 11300, and 11400, respectively, to the DRAMs 501 (the frame buffers) in the image processing apparatuses in which the intra-apparatus WDMACs 503 themselves are placed. The intra-apparatus WDMACs 503 of the image processing apparatuses 101, 102, 103, and 104 receive the divided image data 11100, 11200, 11300, and 11400, respectively, illustrated in Fig. 11A. If receiving the divided image data 11100, the intra-apparatus WDMAC 503 of the image processing apparatus 101 writes the entirety of the divided image data 11100 to the frame buffer 600 allocated in the DRAM 501 of the image processing apparatus 101. As illustrated at the upper left of Fig. 11B, the writing position of the divided image data 11100 is identified by, for example, a start address 11101, a line size 11102, and the number of lines 11103, which are set by the control device such as the CPU (not illustrated). Similarly, the intra-apparatus WDMACs 503 of the image processing apparatuses 102, 103, and 104 write the divided image data 11200, 11300, and 11400, respectively, to the frame buffers 600 in the respective image processing apparatuses. As illustrated at the upper right of Fig. 11B, the writing position of the divided image data 11200 is identified by a start address 11201, a line size 11202, and the number of lines 11203. Similarly, as illustrated at the lower left and the lower right of Fig. 11B, the writing positions of the divided image data 11300 and 11400 are identified by start addresses 11301 and 11401, line sizes 11302 and 11402, and the numbers of lines 11303 and 11403, respectively. If the writing in step S1002 is completed, the processing proceeds to step S1003.

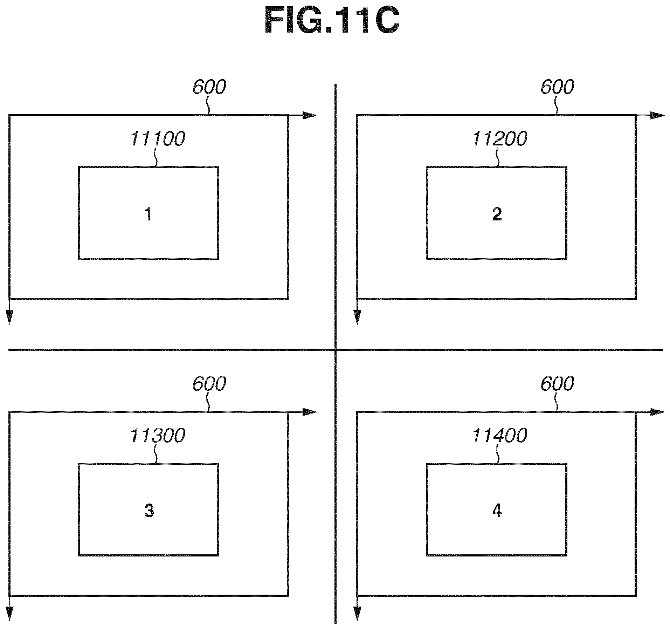

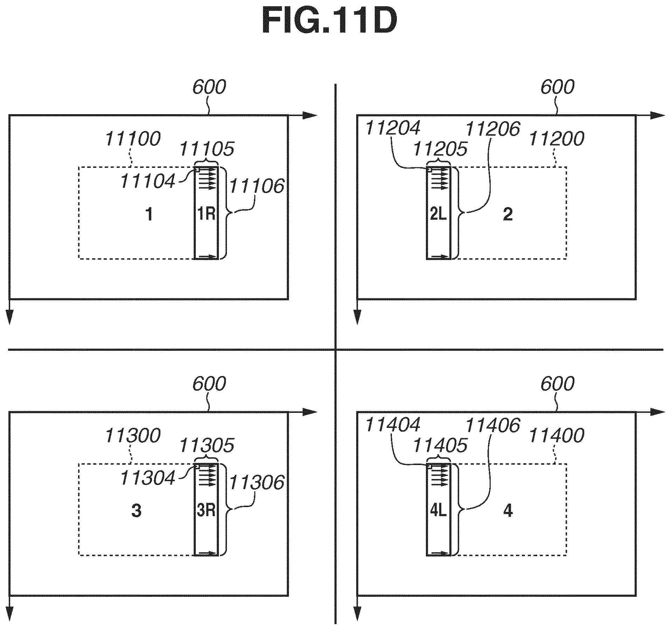

In step S1003, the first inter-apparatus copy DMAC 904 of each of the image processing apparatuses 101 to 104 copies image data of a first overlap region. The first inter-apparatus copy DMAC 904 copies image data of the first overlap region from the frame buffer 600 of the image processing apparatus in which the first inter-apparatus copy DMAC 904 itself is placed to the frame buffer 600 of another image processing apparatus. When the process of this step is started, the divided image data 11100, 11200, 11300, and 11400 illustrated in Fig. 11C is present in the frame buffers 600 of the image processing apparatuses 101, 102, 103, and 104, respectively. As illustrated at the upper left of Fig. 11D, the first inter-apparatus copy DMAC 904 of the image processing apparatus 101 reads image data of an overlap region 1R in the horizontal direction. The image data of the overlap region 1R is, in the divided image data 11100 in the frame buffer 600 of the image processing apparatus 101, image data necessary for image processing to be performed by another image processing apparatus. The reading position of the image data of the overlap region 1R is identified by a start address 11104, a line size 11105, and the number of lines 11106, which are set by the control device such as the CPU (not illustrated).

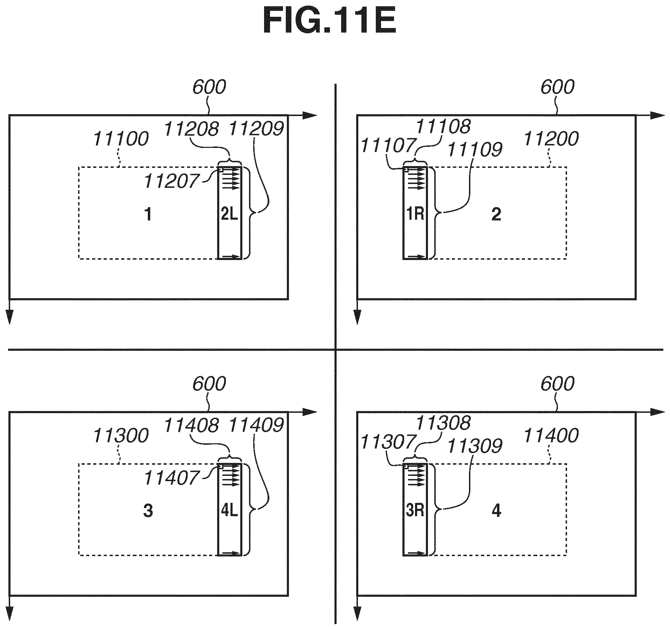

Then, as illustrated at the upper right of Fig. 11E, the first inter-apparatus copy DMAC 904 of the image processing apparatus 101 writes the image data of the overlap region 1R to the frame buffer 600 of the image processing apparatus 102. The writing position of the image data of the overlap region 1R is identified by a start address 11107, a line size 11108, and the number of lines 11109, which are set by the control device such as the CPU (not illustrated). Further, as illustrated at the upper right of Fig. 11E, this writing position is set to a position adjacent to the left edge of the divided image data 11200. Consequently, it is possible to handle the image data of the overlap region 1R and the divided image data 11200 as image data of a single rectangular region.

The first inter-apparatus copy DMAC 904 of the image processing apparatus 102 copies image data of an overlap region 2L from the frame buffer 600 of the image processing apparatus 102 to the frame buffer 600 of the image processing apparatus 101. The first inter-apparatus copy DMAC 904 of the image processing apparatus 103 copies image data of an overlap region 3R from the frame buffer 600 of the image processing apparatus 103 to the frame buffer 600 of the image processing apparatus 104. The first inter-apparatus copy DMAC 904 of the image processing apparatus 104 copies image data of an overlap region 4L from the frame buffer 600 of the image processing apparatus 104 to the frame buffer 600 of the image processing apparatus 103. Further, the writing positions of the image data of the overlap regions 2L, 3R, and 4L are identified by start addresses 11207, 11307, and 11407, line sizes 11208, 11308, and 11408, and the numbers of lines 11209, 11309, and 11409, respectively. If the copying in step S1003 is completed, the processing proceeds to step S1004.

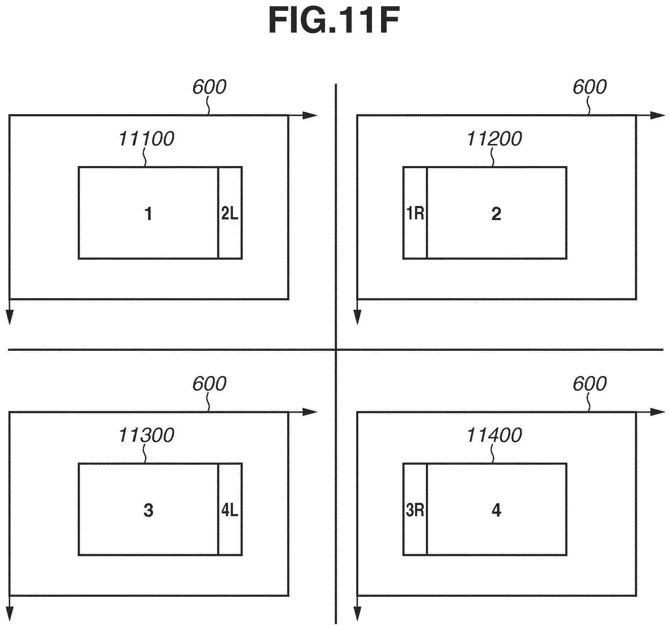

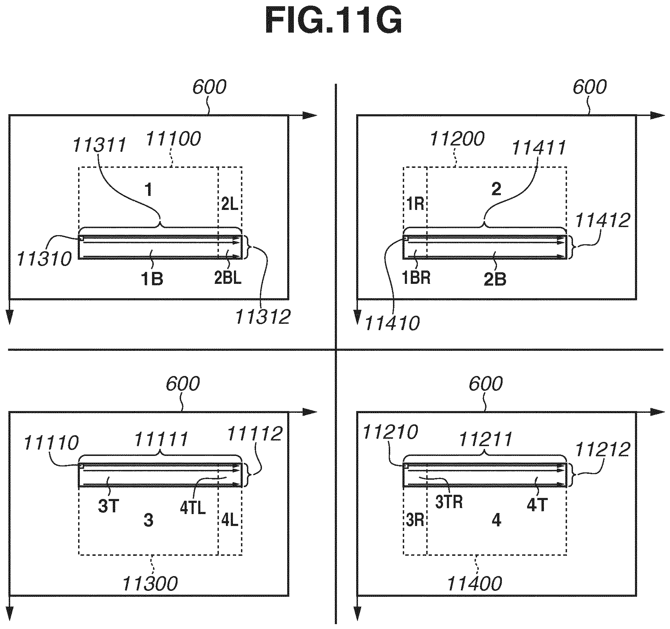

In step S1004, the second inter-apparatus copy DMAC 907 of each of the image processing apparatuses 101 to 104 copies image data of a second overlap region. The second inter-apparatus copy DMAC 907 copies the second overlap region from the frame buffer 600 of another image processing apparatus to the frame buffer 600 of the image processing apparatus. When the process of this step is started, image data illustrated at the upper left, the upper right, the lower left, and the lower right of Fig. 11F is present in the frame buffers 600 of the image processing apparatuses 101, 102, 103, and 104, respectively. The second inter-apparatus copy DMAC 907 of the image processing apparatus 101 reads the image data of the second overlap region. As illustrated at the lower left of Fig. 11G, the second overlap region is, in the image data in the frame buffer 600 of the image processing apparatus 103, an overlap region necessary for image processing to be performed by the image processing apparatus 101. More specifically, the second overlap region is a region obtained by combining overlap regions 3T and 4TL in a region obtained by combining the divided image data 11300 and the image data of the overlap region 4L. The reading position of the second overlap region is identified by a start address 11110, a line size 11111, and the number of lines 11112, which are set by the control device such as the CPU (not illustrated).

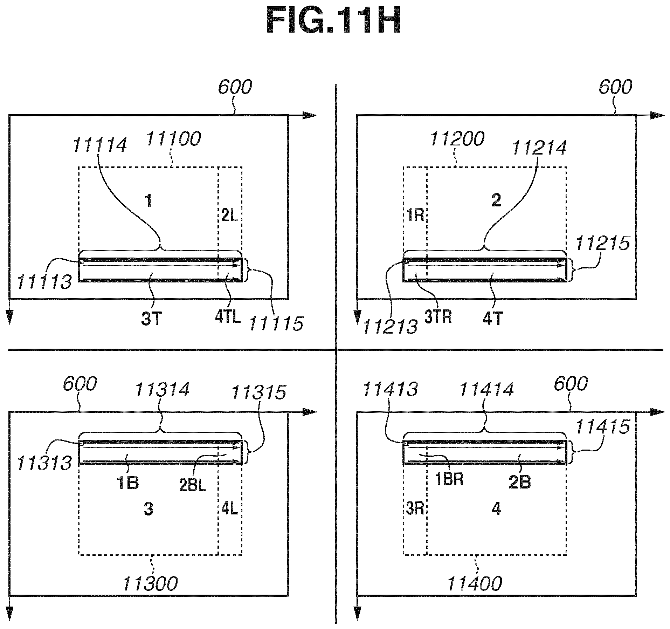

Then, the second inter-apparatus copy DMAC 907 of the image processing apparatus 101 writes the image data of the second overlap region to the frame buffer 600 of the image processing apparatus 101. As illustrated at the upper left of Fig. 11H, the writing position of the image data of the second overlap region is identified by a start address 11113, a line size 11114, and the number of lines 11115, which are set by the control device such as the CPU (not illustrated). Further, as illustrated at the upper left of Fig. 11H, this writing position is set to a position adjacent to the lower edges of the divided image data 11100 and the image data of the overlap region 2L. Consequently, it is possible to handle the divided image data 11100 and the image data of the overlap regions 2L, 3T, and 4TL as image data of a single rectangular region.

As illustrated at the upper right of Fig. 11H, the second inter-apparatus copy DMAC 907 of the image processing apparatus 102 copies image data of overlap regions 4T and 3TR from the frame buffer 600 of the image processing apparatus 104 to the frame buffer 600 of the image processing apparatus 102. The writing position of the image data of the overlap regions 4T and 3TR is identified by a start address 11213, a line size 11214, and the number of lines 11215. As illustrated at the upper right of Fig. 11H, this writing position is set to a position adjacent to the lower edges of the divided image data 11200 and the image data of the overlap region 1R. As illustrated at the lower left of Fig. 11G, the second inter-apparatus copy DMAC 907 of the image processing apparatus 103 copies image data of overlap regions 1B and 2BL from the frame buffer 600 of the image processing apparatus 101 to the frame buffer 600 of the image processing apparatus 103. The writing position of the image data of the overlap regions 1B and 2BL is identified by a start address 11313, a line size 11314, and the number of lines 11315. As illustrated at the lower left of Fig. 11H, this writing position is set to a position adjacent to the upper edges of the divided image data 11300 and the image data of the overlap region 4L. As illustrated at the lower right of Fig. 11G, the second inter-apparatus copy DMAC 907 of the image processing apparatus 104 copies image data of overlap regions 2B and 1BR from the frame buffer 600 of the image processing apparatus 102 to the frame buffer 600 of the image processing apparatus 104. The writing position of the image data of the overlap regions 2B and 1BR is identified by a start address 11413, a line size 11414, and the number of lines 11415. As illustrated at the lower right of Fig. 11H, this writing position is set to a position adjacent to the upper edges of the divided image data 11400 and the image data of the overlap region 3R. If the copying in step S1004 is completed, the processing proceeds to step S1005.

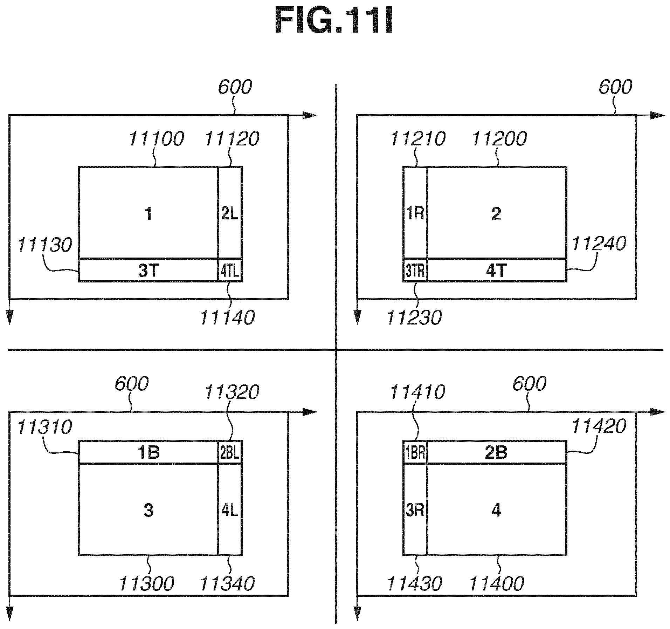

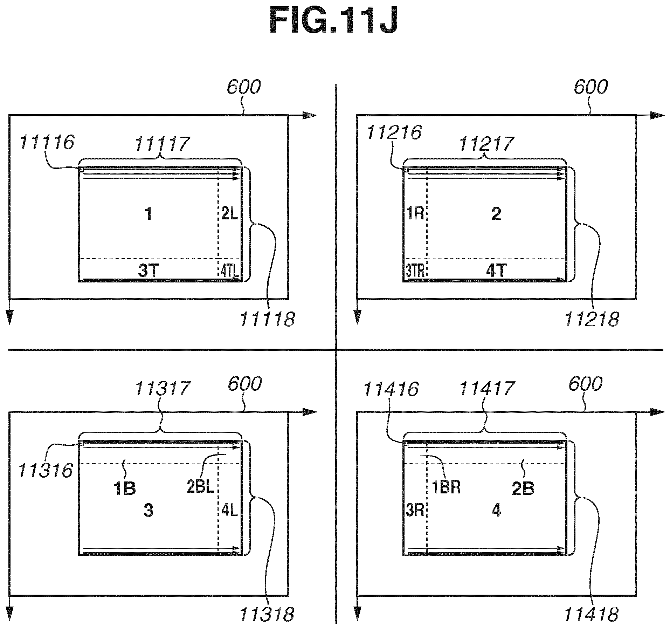

In step S1005, the intra-apparatus RDMAC 507 of each of the image processing apparatuses 101 to 104 reads image data from the frame buffer 600 in the DRAM 501 of the image processing apparatus (the own apparatus). When the process of this step is started, image data illustrated at the upper left, the upper right, the lower left, and the lower right of Fig. 11I is present in the frame buffers 600 of the image processing apparatuses 101, 102, 103, and 104, respectively. As illustrated at the upper left of Fig. 11I, the intra-apparatus RDMAC 507 of the image processing apparatus 101 reads image data obtained by combining the divided image data 11100 and image data 11120, 11130, and 11140 of the overlap regions 2L, 3T, and 4TL. As illustrated at the upper left of Fig. 11J, the reading position of this image data is identified by a start address 11116, a line size 11117, and the number of lines 11118, which are set by the control device such as the CPU (not illustrated).

As illustrated at the upper right of Fig. 11I, the intra-apparatus RDMAC 507 of the image processing apparatus 102 reads image data obtained by combining the divided image data 11200 and image data 11210, 11230, and 11240 of the overlap regions 1R, 3TR, and 4T. As illustrated at the upper right of Fig. 11J, the reading position of this image data is identified by a start address 11216, a line size 11217, and the number of lines 11218. As illustrated at the lower left of Fig. 11I, the intra-apparatus RDMAC 507 of the image processing apparatus 103 reads image data obtained by combining the divided image data 11300 and image data 11310, 11320, and 11340 of the overlap regions 1B, 2BL, and 4L. As illustrated at the lower left of Fig. 11J, the reading position of this image data is identified by a start address 11316, a line size 11317, and the number of lines 11318. As illustrated at the lower right of Fig. 11I, the intra-apparatus RDMAC 507 of the image processing apparatus 104 reads image data obtained by combining the divided image data 11400 and image data 11410, 11420, and 11430 of the overlap regions 1BR, 2B, and 3R. As illustrated at the lower right of Fig. 11J, the reading position of this image data is identified by a start address 11416, a line size 11417, and the number of lines 11418. After the reading in step S1005, the process of step S1006 is performed.

In step S1006, the image processing module 509 of each of the image processing apparatuses 101 to 104 performs image processing on the image data read by the intra-apparatus RDMAC 507 in the image processing apparatus in which the image processing module 509 itself is placed. Then, the image processing modules 509 of the image processing apparatuses 101, 102, 103, and 104 output images resulting from the image processing as divided output images 150, 160, 170, and 180, respectively. The process of step S1006 is similar to the process of step S707 in Fig. 7 described in the first exemplary embodiment.

By executing the processing in the flowchart illustrated in Fig. 10, the image processing apparatuses 101, 102, 103, and 104 can perform image processing including a filter process on the divided image data 11100, 11200, 11300, and 11400 input to the image processing apparatuses 101, 102, 103, and 104 themselves, and output the divided output images 150, 160, 170, and 180, respectively, subjected to the image processing.

In the present exemplary embodiment, regarding the divided image data 11100, an edge included in the divided image data 11100 and adjacent to the divided image data 11200 is an example of a first edge, and the divided image data 11200 is an example of a first adjacent divided image. Further, an edge included in the divided image data 11100 and adjacent to the divided image data 11300 is an example of a second edge, and the divided image data 11300 is an example of a second adjacent divided image. Further, the image data 11120, 11130, and 11140 is examples of images of peripheral regions of the divided image data 11100. Regarding the divided image data 11200, an edge included in the divided image data 11200 and adjacent to the divided image data 11100 is an example of a first edge, and the divided image data 11100 is an example of a first adjacent divided image. Further, an edge included in the divided image data 11200 and adjacent to the divided image data 11400 is an example of a second edge, and the divided image data 11400 is an example of a second adjacent divided image. Further, the image data 11210, 11230, and 11240 is examples of images of peripheral regions of the divided image data 11200. Regarding the divided image data 11300, an edge included in the divided image data 11300 and adjacent to the divided image data 11400 is an example of a first edge, and the divided image data 11400 is an example of a first adjacent divided image. Further, an edge included in the divided image data 11300 and adjacent to the divided image data 11100 is an example of a second edge, and the divided image data 11100 is an example of a second adjacent divided image. Further, the image data 11310, 11320, and 11340 is examples of images of peripheral regions of the divided image data 11300. Regarding the divided image data 11400, an edge included in the divided image data 11400 and adjacent to the divided image data 11300 is an example of a first edge, and the divided image data 11300 is an example of a first adjacent divided image. Further, an edge included in the divided image data 11400 and adjacent to the divided image data 11200 is an example of a second edge, and the divided image data 11200 is an example of a second adjacent divided image. Further, the image data 11410, 11420, and 11430 is examples of images of peripheral regions of the divided image data 11400.

As described above, in the present exemplary embodiment, the image processing apparatuses 101 to 104 copy the image data of the first overlap regions necessary for the other image processing apparatuses to perform image processing from the divided image data 11100, 11200, 11300, and 11400, respectively, acquired from the image processing apparatuses themselves. Further, the image processing apparatuses 101 to 104 copy the image data of the second overlap regions necessary for the image processing apparatuses themselves to perform image processing from the divided image data 11100, 11200, 11300, and 11400, respectively, acquired by the other image processing apparatuses. Also in this manner, it is possible to obtain effects similar to those described in the first exemplary embodiment.

Next, a third exemplary embodiment is described. In the first and second exemplary embodiments, a case has been described where image data of an overlap region of divided image data adjacent in the horizontal direction is acquired, and then, divided image data adjacent in the vertical direction and image data of an overlap region adjacent to the divided image data in the horizontal direction are acquired. In contrast, in the present exemplary embodiment, image data of an overlap region of divided image data adjacent in the vertical direction is acquired, and then, divided image data adjacent in the horizontal direction and image data of an overlap region adjacent to the divided image data in the vertical direction are acquired. As described above, the present exemplary embodiment is different from the first and second exemplary embodiments mainly in the order of acquiring divided image data. Thus, in the description of the present exemplary embodiment, portions similar to those of the first and second exemplary embodiments are designated by the same numerals as those in Figs. 1A to 11J, and are not described in detail.

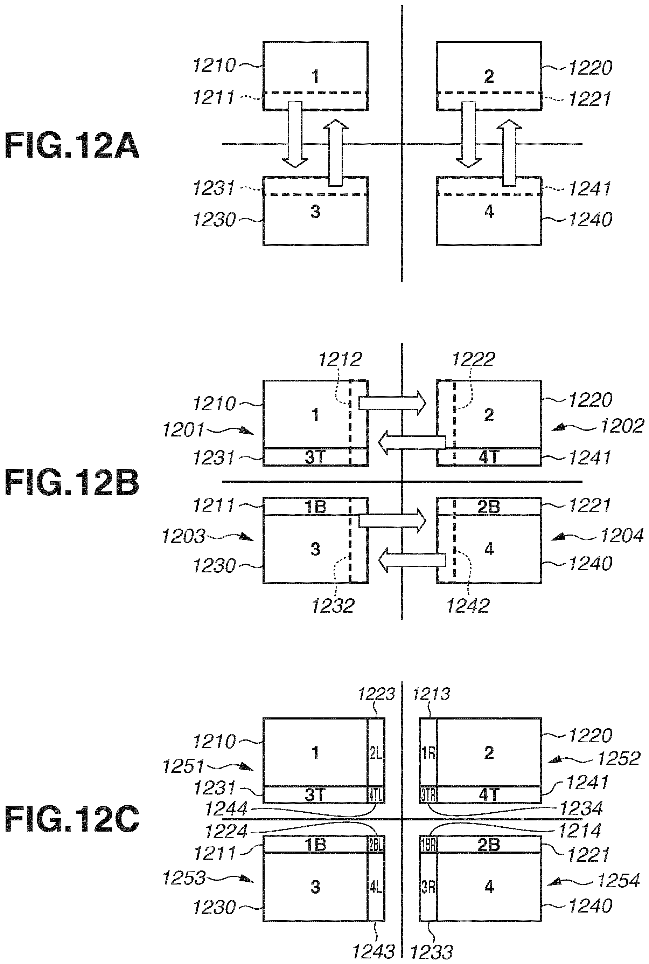

Figs. 12A, 12B, and 12C are diagrams illustrating an example of a method for transmitting and receiving image data of overlap regions between image processing apparatuses.

Fig. 12A illustrates image data held in the image processing apparatuses 101 to 104 at a first stage. The first stage is a stage before the transmission and reception of image data 1211, 1221, 1231, and 1241 of first overlap regions 1B, 2B, 3T, and 4T. At this stage, as illustrated at the upper left of Fig. 12A, image data held in the image processing apparatus 101 is only divided image data 1210, which is the original input data. The divided image data 1210 corresponds to the divided image data 110 illustrated in Fig. 1A and the divided image data 11100 illustrated in Fig. 11A. Similarly, as illustrated at the upper right of Fig. 12A, image data held in the image processing apparatus 102 is only divided image data 1220, which is the original input data. The divided image data 1220 corresponds to the divided image data 120 illustrated in Fig. 1A and the divided image data 11200 illustrated in Fig. 11A. As illustrated at the lower left of Fig. 12A, image data held in the image processing apparatus 103 is only divided image data 1230, which is the original input data. The divided image data 1230 corresponds to the divided image data 130 illustrated in Fig. 1A and the divided image data 11300 illustrated in Fig. 11A. As illustrated at the lower right of Fig. 12A, image data held in the image processing apparatus 104 is only divided image data 1240, which is the original input data. The divided image data 1240 corresponds to the divided image data 140 illustrated in Fig. 1A and the divided image data 11400 illustrated in Fig. 11A.

In the present exemplary embodiment, first image transfer units transfer the image data 1211, 1221, 1231, and 1241 of the regions 1B, 2B, 3T, and 4T surrounded by dashed lines in Fig. 12A, as first overlap regions to the other image processing apparatuses. More specifically, image data of a first overlap region of divided image data is used as image data at the boundary with divided image data adjacent to the divided image data in the vertical direction. Each first image transfer unit corresponds to the inter-apparatus WDMAC 504 in the first exemplary embodiment and the first inter-apparatus copy DMAC 904 in the second exemplary embodiment.

Fig. 12B illustrates image data held in the image processing apparatuses 101 to 104 at a second stage, which follows the first stage. The second stage is a stage after the transmission and reception of the image data 1211, 1221, 1231, and 1241 are completed by the first image transfer and before the transmission and reception of image data 1212, 1222, 1232, and 1242 of second overlap regions are started. At this stage, as illustrated at the upper left of Fig. 12B, image data 1201 held in the image processing apparatus 101 is the divided image data 1210 and the image data 1231 of the overlap region 3T. Similarly, as illustrated at the upper right of Fig. 12B, image data 1202 held in the image processing apparatus 102 is the divided image data 1220 and the image data 1241 of the overlap region 4T. As illustrated at the lower left of Fig. 12B, image data 1203 held in the image processing apparatus 103 is the divided image data 1230 and the image data 1211 of the overlap region 1B. As illustrated at the lower right of Fig. 12B, image data 1204 held in the image processing apparatus 104 is the divided image data 1240 and the image data 1221 of the overlap region 2B. In the present exemplary embodiment, second image transfer units transfer the image data 1212, 1222, 1232, and 1242 of regions surrounded by dashed lines in Fig. 12B, as image data of second overlap regions to the other image processing apparatuses. Each second image transfer unit corresponds to the inter-apparatus RDMAC 508 in the first exemplary embodiment and the second inter-apparatus copy DMAC 907 in the second exemplary embodiment. Further, the image data 1212 includes image data of overlap regions 1R and 3TR. The image data 1222 includes image data of overlap regions 2L and 4TL. The image data 1232 includes image data of overlap regions 1BR and 3R. The image data 1242 includes image data of overlap regions 2BL and 4L.

Fig. 12C illustrates image data held in the image processing apparatuses 101 to 104 at a third stage, which follows the second stage. The third stage is a stage after the transmission and reception of the image data 1212, 1222, 1232, and 1242 of the second overlap regions are completed by the second image transfer. At this stage, as illustrated at the upper left of Fig. 12C, image data 1251 held in the image processing apparatus 101 is the divided image data 1210 and image data 1223, 1231, and 1244 of the overlap regions 2L, 3T, and 4TL. Similarly, as illustrated at the upper right of Fig. 12C, image data 1252 held in the image processing apparatus 102 is the divided image data 1220 and image data 1213, 1234, and 1241 of the overlap regions 1R, 3TR, and 4T. As illustrated at the lower left of Fig. 12C, image data 1253 held in the image processing apparatus 103 is the divided image data 1230 and image data 1211, 1224, and 1243 of the overlap regions 1B, 2BL, and 4L. As illustrated at the lower right of Fig. 12C, image data 1254 held in the image processing apparatus 104 is the divided image data 1240 and image data 1214, 1221, and 1233 of the overlap regions 1BR, 2B, and 3R. If the first transfer and the second transfer are thus completed, all image data necessary for image processing is complete in the image processing apparatuses.

In the present exemplary embodiment, regarding the divided image data 1210, an edge included in the divided image data 1210 and adjacent to the divided image data 1220 is an example of a first edge, and the divided image data 1220 is an example of a first adjacent divided image. Further, an edge included in the divided image data 1210 and adjacent to the divided image data 1230 is an example of a second edge, and the divided image data 1230 is an example of a second adjacent divided image. Further, the image data 1223, 1231, and 1244 is examples of images of peripheral regions of the divided image data 110. Regarding the divided image data 1220, an edge included in the divided image data 1220 and adjacent to the divided image data 1210 is an example of a first edge, and the divided image data 1210 is an example of a first adjacent divided image. Further, an edge included in the divided image data 1220 and adjacent to the divided image data 1240 is an example of a second edge, and the divided image data 1240 is an example of a second adjacent divided image. Further, the image data 1213, 1234, and 1241 is examples of images of peripheral regions of the divided image data 1220. Regarding the divided image data 1230, an edge included in the divided image data 1230 and adjacent to the divided image data 1240 is an example of a first edge, and the divided image data 1240 is an example of a first adjacent divided image. Further, an edge included in the divided image data 1230 and adjacent to the divided image data 1210 is an example of a second edge, and the divided image data 1210 is an example of a second adjacent divided image. Further, the image data 1211, 1224, and 1243 is examples of images of peripheral regions of the divided image data 1230. Regarding the divided image data 1240, an edge included in the divided image data 1240 and adjacent to the divided image data 1230 is an example of a first edge, and the divided image data 1230 is an example of a first adjacent divided image. Further, an edge included in the divided image data 1240 and adjacent to the divided image data 1220 is an example of a second edge, and the divided image data 1220 is an example of a second adjacent divided image. Further, the image data 1214, 1221, and 1233 is examples of images of peripheral regions of the divided image data 1240.

As described above, in the present exemplary embodiment, a case has been described where the first and second overlap regions are replaced by each other as compared with the first and second exemplary embodiments. Also in the present exemplary embodiment, it is possible to obtain effects similar to those of the first and second exemplary embodiments.

Next, a fourth exemplary embodiment is described. In the first to third exemplary embodiments, an image is divided into four regions. In contrast, in the present exemplary embodiment, a case is described where an image is divided into 16 regions. As described above, the present exemplary embodiment is different from the first to third exemplary embodiments mainly in configuration and processing due to the difference in the number of divisions of an image. Thus, in the description of the present exemplary embodiment, portions similar to those of the first to third exemplary embodiments are designated by the same numerals as those in Figs. 1A to 12C, and are not described in detail.

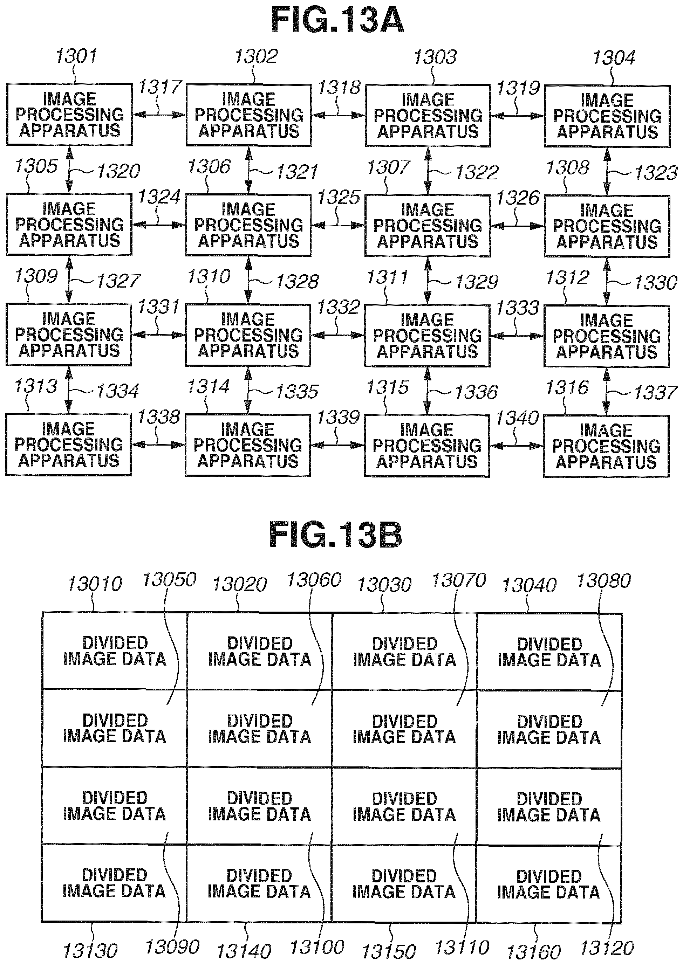

Figs. 13A and 13B are diagrams illustrating an example of the configuration of an image processing system (Fig. 13A) and examples of 16 pieces of divided image data (Fig. 13B). As described above, in the present exemplary embodiment, the image processing system is configured by combining 16 image processing apparatuses. Further, for example, the image processing system can be configured using 16 image processing apparatuses for dividing a single 8K4K (7680 × 4320) image into 16 2K1K (1920 × 1080) images and individually processing the 16 divided images. As described in the first exemplary embodiment, a single image processing system can be configured by combining m × n image processing apparatuses. In the present exemplary embodiment, however, a case is illustrated where m = 4 and n = 4.

In Fig. 13A, image processing apparatuses 1301 to 1316 are similar to the image processing apparatus 500 according to the first exemplary embodiment or the image processing apparatus 900 according to the third exemplary embodiment. Fig. 13A does not illustrate the input of divided image data to each of the image processing apparatuses 1301 to 1316 and the output of a divided output image from each of the image processing apparatuses 1301 to 1316. The image processing apparatuses 1301 and 1302 are connected to each other via an inter-apparatus transmission path 1317. Similarly, the image processing apparatuses are connected to each other via inter-apparatus transmission paths 1317 to 1340 illustrated in Fig. 13A. The inter-apparatus transmission paths 1317 to 1340 are used to transmit image data of overlap regions.

In the present exemplary embodiment, regarding the image processing apparatus 1301, the image processing apparatus 1302 is an example of a second image processing apparatus, the image processing apparatus 1305 is an example of a third image processing apparatus, and the image processing apparatus 1306 is an example of a fourth image processing apparatus. Also regarding the image processing apparatuses 1304, 1313, and 1316, second to fourth image processing apparatuses are determined similarly to the image processing apparatus 1301. Regarding the image processing apparatus 1302, the image processing apparatuses 1301 and 1303 are examples of a second image processing apparatus, the image processing apparatus 1306 is an example of a third image processing apparatus, and the image processing apparatuses 1305 and 1307 are examples of a fourth image processing apparatus. Also regarding the image processing apparatuses 1303, 1314, and 1315, second to fourth image processing apparatuses are determined similarly to the image processing apparatus 1302. Regarding the image processing apparatus 1305, the image processing apparatus 1306 is an example of a second image processing apparatus, the image processing apparatuses 1301 and 1309 are examples of a third image processing apparatus, and the image processing apparatuses 1302 and 1310 are examples of a fourth image processing apparatus. Also regarding the image processing apparatuses 1308, 1309, and 1312, second to fourth image processing apparatuses are determined similarly to the image processing apparatus 1305. Regarding the image processing apparatus 1306, the image processing apparatuses 1305 and 1307 are examples of a second image processing apparatus. Further, the image processing apparatuses 1302 and 1310 are examples of a third image processing apparatus. Further, the image processing apparatuses 1301, 1303, 1309, and 1311 are examples of a fourth image processing apparatus. Also regarding the image processing apparatuses 1307, 1310, and 1311, second to fourth image processing apparatuses are determined similarly to the image processing apparatus 1306.

In Fig. 13B, divided image data 13010 is an input to the image processing apparatus 1301 illustrated in Fig. 13A. Hereinafter, similarly, divided image data 13020 to 13160 is inputs to the image processing apparatuses 1302 to 1316, respectively. The relationships between the connections between the image processing apparatuses illustrated in Fig. 13A and the placement of the divided image data in image data before the division illustrated in Fig. 13B are similar to the relationships in a case where the four image processing apparatuses according to the first to third exemplary embodiments are used. More specifically, the inter-apparatus transmission paths 1317 to 1340 are included between the image processing apparatuses 1301 to 1316 and image processing apparatuses to which divided image data adjacent to the divided image data 13010 to 13160 input to the image processing apparatuses 1301 to 1316, respectively, in the horizontal or vertical direction is input. Meanwhile, there are no inter-apparatus transmission paths between image processing apparatuses to which pieces of divided image data adjacent to each other in oblique directions are input, and these image processing apparatuses do not directly transmit and receive images to and from each other.

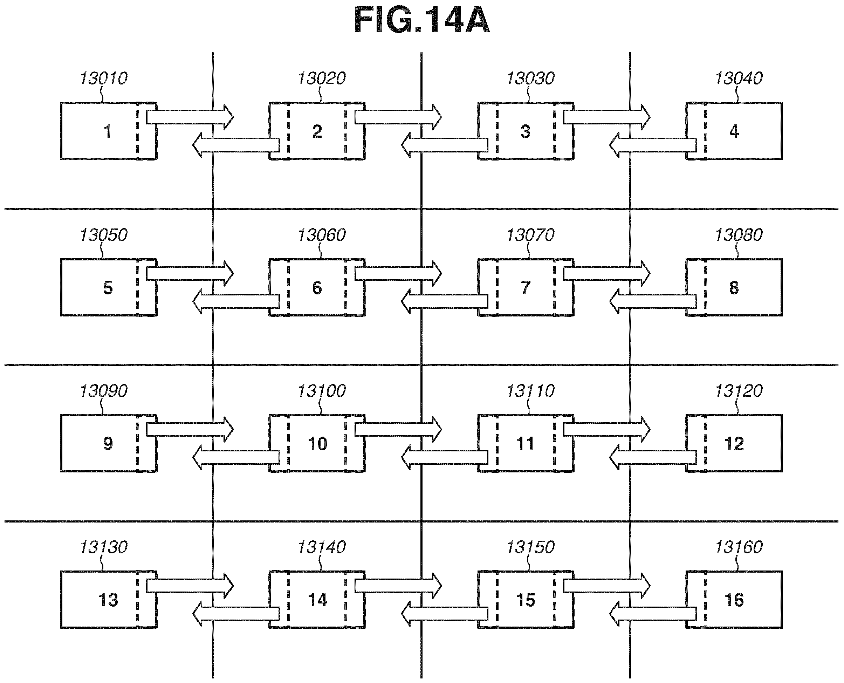

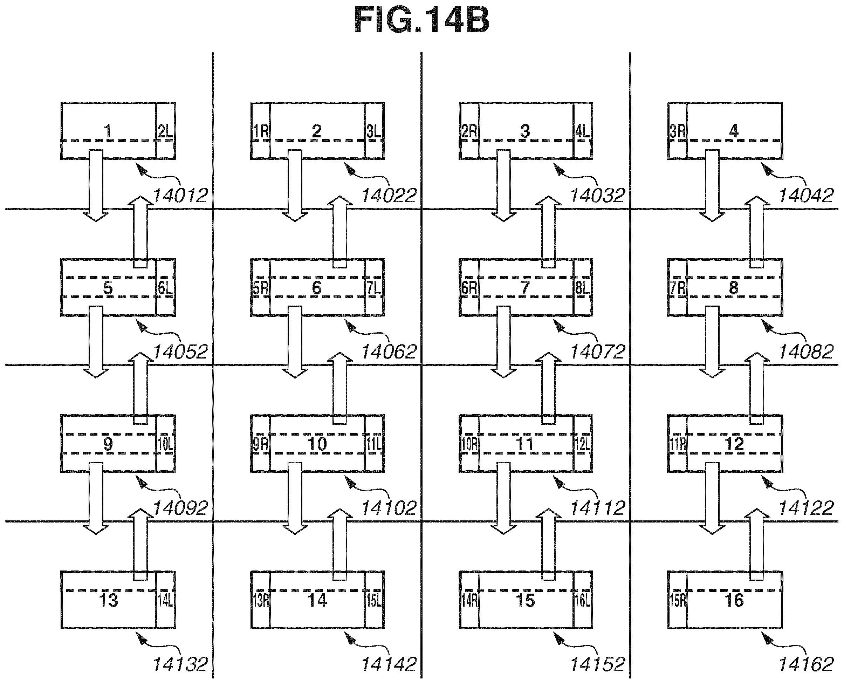

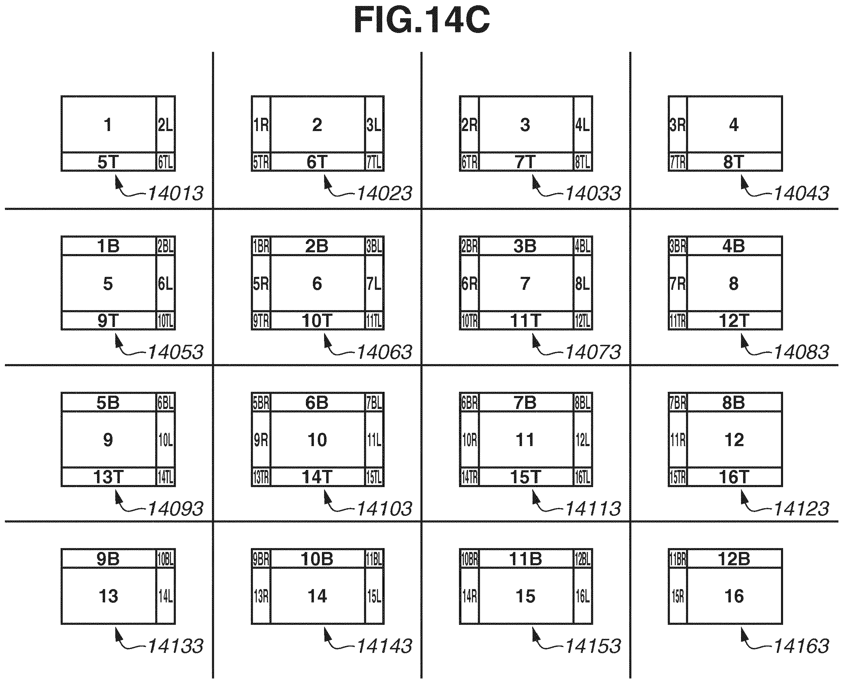

Next, with reference to Figs. 14A, 14B, and 14C, a description is given of an example of a method for transmitting and receiving divided image data and image data of overlap regions between image processing apparatuses.

Fig. 14A illustrates image data held in the image processing apparatuses 1301 to 1316 at a first stage. The first stage is a stage before the transfer of image data of first overlap regions. At this stage, image data held in the image processing apparatus 1301 is only the divided image data 13010, which is the original input data. Similarly, image data held in the image processing apparatuses 1302 to 1316 is only the divided image data 13020 to 13160, respectively, which is the original input data. First image transfer units transfer image data of overlap regions surrounded by dashed lines in Fig. 14A, as image data of first overlap regions to the other image processing apparatuses.

Fig. 14B illustrates image data held in the image processing apparatuses 1301 to 1316 at a second stage, which follows the first stage. The second stage is a stage after the transmission and reception of the image data are completed by the first image transfer and before the transmission and reception of image data of second overlap regions are started. At this stage, image data 14012 held in the image processing apparatus 1301 is the divided image data 13010 and image data of an overlap region 2L. Similarly, image data 14022 to 14162 held in the image processing apparatuses 1302 to 1316 is the divided image data 13020 to 13160, which is the original inputs, and image data of overlap regions adjacent to the divided image data 13020 to 13160, respectively, in the horizontal direction. Second image transfer units transfer image data of regions surrounded by dashed lines in Fig. 14B, as image data of second overlap regions to the other image processing apparatuses. As described above, the image processing apparatuses 1301 to 1316 transmit and receive image data to and from each other, thereby transferring the image data of the regions surrounded by dashed lines in Fig. 14B to the other image processing apparatuses. The image processing apparatuses 1302, 1303, 1306, 1307, 1310, 1311, 1314, and 1315 transfer image data of overlap regions in both left and right directions.

Fig. 14C illustrates image data held in the image processing apparatuses 1301 to 1316 at a third stage, which follows the second stage. The third stage is a stage after the transmission and reception of the image data of the second overlap regions are completed by the second image transfer. At this stage, image data 14013 held in the image processing apparatus 1301 is the divided image data 13010 and image data of overlap regions 2L, 5T, and 6TL. In this state, all image data necessary for image processing is complete. Similarly, image data 14023 to 14163 held in the image processing apparatuses 1302 to 1316 is the divided image data 13020 to 13160, respectively, which is the original inputs, and image data of all overlap regions necessary for image processing. The image processing apparatuses 1305 to 1312 transfer image data of overlap regions in both up and down directions. If the first transfer and the second transfer are thus completed, all image data necessary for image processing is complete in the image processing apparatuses.

In the present exemplary embodiment, regarding the divided image data 13010, an edge included in the divided image data 13010 and adjacent to the divided image data 13020 is an example of a first edge, and the divided image data 13020 is an example of a first adjacent divided image. Further, an edge included in the divided image data 13010 and adjacent to the divided image data 13050 is an example of a second edge, and the divided image data 13050 is an example of a second adjacent divided image. Further, the image data of the overlap regions 2L, 5T, and 6TL is examples of images of peripheral regions of the divided image data 13010. Also regarding the divided image data 13040, 13030, and 13160, a first edge, a first adjacent divided image, a second edge, a second adjacent divided image, and images of peripheral regions are determined similarly to the divided image data 13010. Further, regarding the divided image data 13020, edges included in the divided image data 13020 and adjacent to the divided image data 13010 and 13030 are examples of a first edge, and the divided image data 13010 and 13030 is examples of a first adjacent divided image. Further, an edge included in the divided image data 13020 and adjacent to the divided image data 13060 is an example of a second edge, and the divided image data 13060 is an example of a second adjacent divided image. Further, image data of overlap regions 1R, 3L, 5TR, 6T, and 7TL is examples of images of peripheral regions of the divided image data 13020. Also regarding the divided image data 13030, 13140, and 13150, a first edge, a first adjacent divided image, a second edge, a second adjacent divided image, and images of peripheral regions are determined similarly to the divided image data 13020. Further, regarding the divided image data 13050, an edge included in the divided image data 13050 and adjacent to the divided image data 13060 is an example of a first edge, and the divided image data 13060 is an example of a first adjacent divided image. Further, edges included in the divided image data 13050 and adjacent to the divided image data 13010 and 13090 are examples of a second edge, and the divided image data 13010 and 13090 is examples of a second adjacent divided image. Further, image data of overlap regions 1B, 2BL, 6L, 9T, and 10TL is examples of images of peripheral regions of the divided image data 13050. Also regarding the divided image data 13080, 13090, and 13120, a first edge, a first adjacent divided image, a second edge, a second adjacent divided image, and images of peripheral regions are determined similarly to the divided image data 13050. Further, regarding the divided image data 13060, edges included in the divided image data 13060 and adjacent to the divided image data 13050 and 13070 are examples of a first edge, and the divided image data 13050 and 13070 is examples of a first adjacent divided image. Further, edges included in the divided image data 13060 and adjacent to the divided image data 13020 and 13100 are examples of a second edge, and the divided image data 13020 and 13100 is examples of a second adjacent divided image. Further, image data of overlap regions 1BR, 2B, 3BL, 5R, 7L, 9TR, 10T, and 11TL is examples of images of peripheral regions of the divided image data 13060. Also regarding the divided image data 13070, 13100, and 13110, a first edge, a first adjacent divided image, a second edge, a second adjacent divided image, and images of peripheral regions are determined similarly to the divided image data 13060.

As described above, also if a single image processing system is configured by combining 16 image processing apparatuses, it is possible to obtain effects similar to those of the first to third exemplary embodiments. In Figs. 13A, 13B, 14A, 14B, and 14C, a case has been described where image data of an overlap region of divided image data adjacent in the horizontal direction is acquired first as in the first and second exemplary embodiments. Alternatively, image data of an overlap region of divided image data adjacent in the vertical direction may be acquired first as in the third exemplary embodiment.

In the first to fourth exemplary embodiments, a description has been given of the form in which the image processing apparatuses 500 and 900 are achieved using system LSI. The image processing apparatuses 500 and 900, however, do not necessarily need to be achieved using system LSI. Alternatively, for example, a single image processing apparatus can also be achieved using a single video display device (a liquid crystal projector or a liquid crystal display).

According to the present exemplary embodiment, it is possible to easily perform image processing on images obtained by dividing a single image. All the above exemplary embodiments merely illustrate specific examples for carrying out the present invention, and the technical scope of the present invention should not be limitedly interpreted based on these exemplary embodiments. In other words, the present invention can be carried out in various forms without departing from the technical idea or the main feature of the present invention.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus comprising:
an input means for inputting a first divided image among a plurality of divided images obtained by spatially dividing an image;
an acquisition means for acquiring an image of a peripheral region of the first divided image from a second image processing apparatus for performing image processing on a second divided image adjacent to the first divided image input by the input means at a first edge of the first divided image, and to also acquire an image of a peripheral region of the first divided image from a third image processing apparatus for performing image processing on a third divided image adjacent to the first divided image input by the input means at a second edge of the first divided image;
an image processing means for executing image processing on the first divided image input by the input means, using the images of the peripheral regions acquired from the second and third image processing apparatuses by the acquisition means; and
an output means for outputting a divided image having been subjected to the image processing executed by the image processing means,
wherein the image of the peripheral region acquired from the third image processing apparatus by the acquisition means includes an image of at least a part of a fourth divided image adjacent to the third divided image.

2. The image processing apparatus according to claim 1,
wherein the acquisition means acquires, in the second divided image, an image corresponding to a region within a first predetermined distance from the first edge, as the image of the peripheral region from the second image processing apparatus, and
wherein the acquisition means acquires, in the third divided image, an image corresponding to a region within a second predetermined distance from the second edge, as the image of the peripheral region from the third image processing apparatus.

3. The image processing apparatus according to claim 2, wherein the first and second predetermined distances have the same length.

4. The image processing apparatus according to claim 1, wherein the fourth divided image is an image displayed at a position obliquely below the first divided image.

5. The image processing apparatus according to claim 1, wherein the first and second divided images are adjacent to each other in a horizontal direction, and the first and third divided images are adjacent to each other in a vertical direction.

6. The image processing apparatus according to claim 1, wherein the first and second divided images are adjacent to each other in a vertical direction, and the first and third divided images are adjacent to each other in a horizontal direction.

7. The image processing apparatus according to claim 1, wherein the acquisition means reads the images of the peripheral regions from memories included in the respective second and third image processing apparatuses.

8. The image processing apparatus according to claim 1, further comprising a memory,
wherein the acquisition means reads the images of the peripheral regions written to the memory by the second and third image processing apparatuses.

9. An image processing method comprising:
inputting a first divided image among a plurality of divided images obtained by spatially dividing an image;
acquiring an image of a peripheral region of the first divided image from a second image processing apparatus for performing image processing on a second divided image adjacent to the first divided image at a first edge of the first divided image;
acquiring an image of a peripheral region of the first divided image from a third image processing apparatus for performing image processing on a third divided image adjacent to the first divided image at a second edge of the first divided image;
executing image processing on the first divided image, using the images of the peripheral regions acquired from the second and third image processing apparatuses; and
outputting a divided image on which the image processing has been executed,
wherein the image of the peripheral region acquired from the third image processing apparatus includes an image of at least a part of a fourth divided image adjacent to the third divided image.

10. A program for causing a computer to execute a method, the method comprising:
inputting a first divided image among a plurality of divided images obtained by spatially dividing an image;
acquiring an image of a peripheral region of the first divided image from a second image processing apparatus for performing image processing on a second divided image adjacent to the first divided image at a first edge of the first divided image;
acquiring an image of a peripheral region of the first divided image from a third image processing apparatus for performing image processing on a third divided image adjacent to the first divided image at a second edge of the first divided image;
executing image processing on the first divided image, using the images of the peripheral regions acquired from the second and third image processing apparatuses; and
outputting a divided image on which the image processing has been executed,
wherein the image of the peripheral region acquired from the third image processing apparatus includes an image of at least a part of a fourth divided image adjacent to the third divided image.
